# EUROPEAN PATENT APPLICATION

(11) **EP 3 886 212 A1**
(43) Date of publication of application: **29.09.2021**
(21) Application number: 21164856.3
(22) Date of filing: 25.03.2021
(51) Int. Cl.: H01M 4/131, H01M 4/1391, H01M 4/36, H01M 4/485, H01M 4/525, H01M 10/0525

(54) **CATHODE MATERIAL AND PROCESS**

(30) Priority: 27.03.2020 GB 202004485
(71) Applicant: Johnson Matthey Public Limited Company, London EC4A 4AB (GB)
(72) Inventor: CLARK, Joanna Helen, Reading, Berkshire RG4 9NH (GB); DIAMOND, Andrew, Billingham, Cleveland TS23 1LB (GB); HAMMER, Eva-Maria, Reading, Berkshire RG4 9NH (GB); WALE, Olivia Rose, Reading, Berkshire RG4 9NH (GB)
(74) Representative: Lenden, Philip

(57) **Abstract**

The present invention relates to a surface-modified particulate lithium nickel oxide material. The invention also relates to a process of making a surface-modified particulate lithium nickel oxide material. Further aspects of the invention include a cathode comprising the surface-modified particulate lithium nickel oxide material, a lithium secondary cell or battery comprising such a cathode, and the use of the particulate lithium nickel oxide to improve the capacity retention of a lithium secondary cell or battery.

## Description

### Field of the Invention

The present invention relates to improved particulate lithium nickel oxide materials which are useful as cathode materials in lithium secondary batteries. The present invention also provides processes for preparing such lithium nickel oxide materials, and electrodes and cells comprising the materials.

### Background of the Invention

Lithium transition metal oxide materials having the formula LiMO₂, where M typically includes one or more transition metals, find utility as cathode materials in lithium ion batteries. Examples include LiNiO₂ and LiCoO₂.

US 6921609 B2 describes a composition suitable for use as a cathode material of a lithium battery which includes a core composition having an empirical formula LiₓM'_{z}Ni_{1-y}M"_{y}O₂ and a coating on the core which has a greater ratio of Co to Ni than the core.

WO 2013/025328 A1 describes a particle including a plurality of crystallites including a first composition having a layered α-NaFeO₂-type structure. The particles include a grain boundary between adjacent crystallites, and the concentration of cobalt in the grain boundaries is greater than the concentration of cobalt in the crystallites. Cobalt enrichment is achieved by treatment of the particles with a solution of LiNO₃ and Co(NO₃)₂, followed by spray drying and calcining.

Studies of LiNO₂ and similar materials have shown that there is a phase transition from one hexagonal phase (H2) to another hexagonal phase (H3) during delithiation which occurs at high voltages (around 4.2 V vs Li⁺/Li) i.e. when the material has a significantly reduced lithium content. This phase transition is accompanied by a large and sudden reduction in volume of the unit cell caused by c-axis contraction. This c-axis contraction results in permanent structural damage to the material which has been linked to capacity fade upon cycling.

With demand increasing for lithium-ion batteries in high-end applications such as electric vehicles (EVs), it is imperative to use cathode materials which provide not only acceptable specific capacity but also excellent retention of that capacity over a large number of charging cycles, so that the range of the vehicle after each charge over its lifetime is as consistent as possible. Capacity retention is also commonly referred to simply as the "cyclability" of the battery.

There therefore remains a need for improved lithium transition metal oxide materials and processes for their manufacture. In particular, there remains a need for improvements in the capacity retention of lithium transition metal oxide materials when used as cathode materials in lithium secondary batteries.

### Summary of the Invention

The present inventors have found that the presence of certain levels of magnesium as a dopant and aluminium as a surface modification agent in lithium nickel oxide materials results in improved capacity retention when those materials are used as a cathode material in a lithium secondary battery.

Without wishing to be bound by theory, the present inventors believe that the doping of a certain level of magnesium into the LiNiO₂-type material imparts structural stability to the material which reduces the amount of c-axis contraction during the H2→H3 phase transition. It is believed that a tetrahedral site at an intermediate position between the MO₂ layer and the Li layer within the crystal is occupied by the magnesium ions when the Li content of the material becomes low, creating a "pillaring effect" which stabilises the structure and reduces the contraction of the c-axis which occurs during the H2→H3 phase transition, thereby mitigating the c-axis contraction and contributing to the observed increased capacity retention as a result.

Furthermore, the inventors have found that the presence of aluminium as a surface modification agent in addition to magnesium doping offers further improvements in capacity retention.

Particularly advantageously, the present inventors have found that the presence of certain levels of magnesium as a dopant and aluminium as a surface modification agent in lithium nickel oxide materials enables a reduction in the level of cobalt in the materials, while retaining excellent capacity retention. Reducing the amount of cobalt in cathode materials is highly desirable in the industry, since cobalt can be a significant contribution to the cost of the materials (due to its high relative cost and historic price volatility), and because it may be preferable to reduce cobalt content for ethical reasons. Typically, reduction in cobalt content results in a reduction in capacity retention, and therefore providing battery materials with acceptable performance characteristics and low cobalt levels has been challenging.

Accordingly, a first aspect of the invention is a surface-modified particulate lithium nickel oxide material having Formula I

LiₐNiₓCo_{y}Mg_{z}AlₚMqO_{2+b} Formula I

in which:
0.8 ≤ a ≤ 1.2
0.8 ≤ x < 1
0.03 ≤ y ≤ 0.078
0.017 ≤ z ≤ 0.1
0.004 ≤ p ≤0.01
0 ≤ q ≤0.2, and
-0.2 ≤ b ≤ 0.2;
wherein M is selected from Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof; and
wherein the particulate lithium nickel oxide material comprises an enriched surface layer comprising aluminium.

These particulate lithium nickel oxide materials provide improved capacity retention when used as an electrode material in a lithium secondary cell or battery. Furthermore, they may provide other important benefits such as a lower % increase in direct current internal resistance (DCIR) over time and/or an acceptably high level of specific capacity. The materials may therefore be used to provide cells or batteries of improved performance and enhanced usable lifetime, providing particular advantages in high-end applications such as electric vehicles.

A second aspect of the invention is a process for preparing a surface-modified particulate lithium nickel oxide material having Formula I

LiₐNiₓCo_{y}Mg_{z}AlₚM_{q}O_{2+b} Formula I

in which:
0.8 ≤ a ≤ 1.2
0.8 ≤ x < 1
0.03 ≤ y ≤ 0.78
0.017 ≤ z ≤ 0.1
0.004 ≤ p ≤0.01
0 ≤ q ≤ 0.2, and
-0.2 ≤ b ≤ 0.2;
wherein M is selected from Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof;
the process comprising the steps of:
mixing lithium-containing compound with a nickel-containing compound, a cobalt-containing compound, a magnesium-containing compound and optionally an M-containing compound and/or an Al-containing compound, wherein a single compound may optionally contain two or more of Ni, Co, Mg, Al and M, to obtain a mixture;
calcining the mixture to obtain a first calcined material; and
contacting the first calcined material with an aluminium-containing compound and optionally one or more of a cobalt-containing compound, a lithium-containing compound and an M-containing compound in a surface-modification step to form an enriched surface layer on the first calcined material.

A third aspect of the invention provides particulate lithium nickel oxide obtained or obtainable by a process described herein.

A fourth aspect of the invention provides a cathode material for a lithium secondary battery comprising the particulate lithium nickel oxide material according to the first aspect.

A fifth aspect of the invention provides a cathode comprising the particulate lithium nickel oxide material according to the first aspect.

A sixth aspect of the invention provides a lithium secondary cell or battery (e.g. a secondary lithium ion battery) comprising the cathode according to the fifth aspect. The battery typically further comprises an anode and an electrolyte.

A seventh aspect of the invention provides use of the particulate lithium nickel oxide according to the first aspect for the preparation of a cathode of a secondary lithium battery (e.g. a secondary lithium ion battery).

An eighth aspect of the invention provides the use of the particulate lithium nickel oxide according to the first aspect as a cathode material to improve the capacity retention or cyclability of a lithium secondary cell or battery.

A ninth aspect is a method of improving the capacity retention or cyclability of a lithium secondary cell or battery, comprising the use of a cathode material in the cell or battery, wherein the cathode material comprises the particulate lithium nickel oxide material according to the first aspect.

### Brief Description of the Drawings

Figure 1 shows a plot of capacity retention over 50 cycles at 23 °C and a 1C charge/discharge rate for materials of the invention and some comparative materials.
Figure 2 shows a plot of capacity retention over 50 cycles at 23 °C and a 1C charge/discharge rate for materials of the invention.
Figure 3 shows a plot of capacity retention over 50 cycles at 23 °C and a 1C charge/discharge rate for materials of the invention and a comparative material.
Figure 4 shows a plot of capacity retention over 50 cycles at 23 °C and a 1C charge/discharge rate for materials of the invention.
Figure 5 shows the capacity retention after the 50^{th} cycle at 23 °C and a 1C charge/discharge rate for various materials, plotted against the magnesium content of the material.
Figure 6(a) shows a calculated DFT structure for site-disordered Li_{0.00}Ni_{(1-x-y)}CoₓMg_{y}O₂.
Figure 6(b) shows the lattice evolution of the Li-Ni-Co-Mg-O system with respect of the Li loading based on the most stable structures as calculated by DFT.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise. It is intended that upper and lower limits of ranges are independently combinable, and that the various ranges and values given for a, b, x, y, z, p and q are combinable with each other and with the other features recited herein.

The particulate lithium nickel oxide material has a composition according to Formula I defined above. The compositions recited herein may be determined by Inductively Coupled Plasma (ICP) analysis as described in the Examples section below. It may be preferred that the compositions recited herein are ICP compositions. Similarly, the wt% content of elements in the particulate lithium nickel oxide materials may be determined using ICP analysis. The wt% values recited herein are determined by ICP and are with respect to the total weight of the particle analysed (except wt% lithium carbonate which is defined separately below).

In Formula I, 08 ≤ a ≤ 1.2. In some embodiments a is greater than or equal to 0.9, 0.95, 0.99 or 1.0. In some embodiments, a is less than or equal to 1.1, or less than or equal to 1.05. In some embodiments, 0.90 ≤ a ≤ 1.10, for example 0.95 ≤ a ≤ 1.05. In some embodiments, 0.99 ≤ a ≤ 1.05 or 1.0 ≤ a ≤ 1.05. It may be particularly preferred that 0.95 ≤ a ≤ 1.05.

In Formula I, 08 ≤ x < 1. In some embodiments, 0.85 ≤ x < 1 or 0.9 ≤ x < 1. In some embodiments, x is less than or equal to 0.99, 0.98, 0.97, 0.96 or 0.95. In some embodiments, x is great than or equal to 0.85, 0.9 or 0.95. In some embodiments, 08 ≤ x ≤ 0.99, for example 0.85 ≤ x ≤ 0.98, 0.85 ≤ x ≤ 0.98, 0.85 ≤ x ≤ 0.97, 0.85 ≤ x ≤ 0.96 or 0.90 ≤ x ≤ 0.95. It may be particularly preferred that 0.85 ≤ x ≤ 0.98.

In Formula I, 0.03 ≤y ≤ 0.078. In some embodiments y is greater than or equal to 0.035 or 0.04. In some embodiments y is less than or equal to 0.075, 0.070, 0.068, 0.066, 0.063, 0.060, 0.057, 0.055, 0.050 or 0.048. In some embodiments, 0.03 ≤ y ≤ 0.0.066. In some embodiments, 0.03 ≤ y ≤ 0.0.060. In some embodiments, 0.03 ≤ y ≤ 0.055. In some embodiments, 0.03 ≤ y ≤ 0.05. In some embodiments, 0.04 ≤ y ≤ 0.055. It may be particularly preferred that 0.04 ≤ y ≤ 0.078 or 0.04 ≤ y ≤ 0.06.

It may be preferred to have relatively low levels of magnesium as this can result in increased capacity. For example, in some embodiments z is less than or equal to 0.07, 0.055, 0.050, 0.045, 0.040, 0.035 0.030 or 0.025. In some embodiments, z is greater than or equal to 0.020 or 0.030. For example, 0.017 ≤ z ≤ 0.055, 0.017 ≤ z ≤ 0.040, 0.017 ≤ z ≤ 0.030, 0.020 ≤ z ≤ 0.055, 0.020 ≤ z ≤ 0.040, 0.020 ≤ z ≤ 0.030, 0.030 ≤ z ≤ 0.055 or 0.030 ≤ z ≤ 0.040. It may be particularly preferred that 0.03 ≤ z ≤ 0.05 or 0.030 ≤ z ≤ 0.050.

It may be preferred to have relatively high levels of magnesium since this can result in enhanced capacity retention. For example, in some embodiments z is greater than or equal to 0.020, 0.025, 0.030, 0.035, 0.040 or 0.045. In some embodiments z is less than or equal to 0.070 or 0.055. For example, 0.040 ≤ z ≤ 0.070 or 0.040 ≤ z ≤ 0.055.

Higher levels of magnesium may be particularly preferred where the cobalt levels are low. Therefore, in some embodiments the values of y and z may be as recited herein with the proviso that if y is less than or equal to 0.06 then z is greater than or equal to 0.03. This can provide particularly excellent capacity retention with extremely low levels of cobalt.

In some embodiments, the particulate lithium nickel oxide material comprises relatively high levels of both nickel and magnesium. In some embodiments, 0.030 ≤ z ≤ 0.050 and 0.85 ≤ x < 1. In some embodiments, 0.030 ≤ z ≤ 0.050 and 0.90 ≤ x < 1. In some embodiments, 0.035 ≤ z ≤ 0.050 and 0.90 ≤ x < 1.

In some embodiments, the particulate lithium nickel oxide material comprises relatively high levels of both nickel and magnesium, and relatively low levels of cobalt. In some embodiments, 0.030 ≤ z ≤ 0.050, 0.85 ≤ x < 1 and 0.03 ≤ y ≤ 0.0.067, 0.03 ≤ y ≤ 0.0.063, or 0.03:5 y ≤ 0.0.060. In some embodiments, 0.030 ≤ z ≤ 0.050, 0.90 ≤ x < 1 and 0.03 ≤ y ≤ 0.0.067, 0.03 ≤ y ≤ 0.0.063, or 0.03 ≤ y ≤ 0.0.060. In some embodiments, 0.030 ≤ z ≤ 0.050, 0.95 ≤ x < 1 and 0.03 ≤ y ≤ 0.0.067, 0.03 ≤ y ≤ 0.0.063, or 0.03 ≤ y ≤ 0.0.060. The values of a, b, p and q may be as recited herein.

In Formula I, 0.004 ≤ p ≤ 0.01. In some embodiments, p is less than or equal to 0.0090, 0.0080, 0.0075 or 0.0070. In some embodiments p is greater than or equal to 0.005, 0.0055 or 0.0060. In some embodiments, 0.004 ≤ p ≤ 0.0090, 0.005 ≤ p ≤ 0.008, 0.0055 ≤ p ≤ 0.0075 or 0.006 ≤ p ≤ 0.007. It may be particularly preferred that 0.0055 ≤ p ≤ 0.0075 or 0.0055 ≤ p ≤ 0.0080.

In Formula I, -0.2 ≤ b ≤ 0.2. In some embodiments b is greater than or equal to -0.1. In some embodiments b is less than or equal to 0.1. In some embodiments, -0.1 ≤ b ≤ 0.1. In some embodiments, b is 0 or about 0. In some embodiments, b is 0.

In Formula I, M is one or more selected from Mn, V, Ti, B, Zr, Sr, Ca, Cu , Sn, Cr, Fe, Ga, Si, W, Mo, Ta, Y, Sc, Nb, Pb, Ru, Rh and Zn. In some embodiments, M is one or more selected from Mn, V, Ti, B, Zr, Sr, Ca, Cu , Sn, Cr, Fe, Ga, Si and Zn. In some embodiments, M is Mn. In some embodiments, M represents a dopant which is present within the core of the particle but not within the enriched surface layer.

In Formula I, 0 ≤ q ≤ 0.2. In some embodiments, 0 ≤ q ≤ 0.15. In some embodiments, 0 ≤ q ≤ 0.10. In some embodiments, 0 ≤ q ≤ 0.05. In some embodiments, 0 ≤ q ≤ 0.04. In some embodiments, 0 ≤ q ≤ 0.03. In some embodiments, 0 ≤ q ≤ 0.02. In some embodiments, 0 ≤ q ≤ 0.01. In some embodiments, q is 0.

In some embodiments:
0.95 ≤ a≤ 1.05
0.85 ≤ x < 1
0.03 ≤ y ≤ 0.078
0.017 ≤ z ≤ 0.1
0.0055 ≤ p ≤ 0.0080
0 ≤ q ≤ 0.2, and
-0.2 ≤ b ≤ 0.2;
wherein M is selected from Al, Mn, V, Ti, B, Zr, Sr, Ca, Cu , Sn, Cr, Fe, Ga, Si, W, Mo, Ta, Y, Sc, Nb, Pb, Ru, Rh and Zn and combinations thereof
optionally with the proviso that if y is less than or equal to 0.06 then z is greater than or equal to 0.03.

In some embodiments:
0.95 ≤ a ≤ 1.05
0.85 ≤ x < 1
0.03 ≤ y ≤ 0.078
0.017 ≤ z ≤ 0.1
0.0055 ≤ p ≤ 0.0080
q = 0; and
b = 0,
optionally with the proviso that if y is less than or equal to 0.06 then z is greater than or equal to 0.03.

In some embodiments:
0.95 ≤a ≤ 1.05
0.85 ≤ x < 1
0.04 ≤ y ≤ 0.070
0.017 ≤ z ≤ 0.06
0.0055 ≤ p ≤ 0.0080
q = 0; and
b = 0,
optionally with the proviso that if y is less than or equal to 0.06 then z is greater than or equal to 0.03.

In some embodiments:
0.95 ≤a ≤ 1.05
0.85 ≤ x < 1
0.04 ≤ y ≤ 0.065
0.017 ≤ z ≤ 0.050
0.0055 ≤ p ≤ 0.0080
q = 0; and
b = 0,
optionally with the proviso that if y is less than or equal to 0.06 then z is greater than or equal to 0.03.

In some embodiments:
0.95 ≤a ≤ 1.05
0.85 ≤ x < 1
0.04 ≤ y ≤ 0.060
0.03 ≤ z ≤ 0.07
0.0055 ≤ p ≤ 0.0080
q = 0; and
b = 0.

In some embodiments:
0.95 ≤ a ≤ 1.05
0.85 ≤ x < 1
0.04 ≤ y ≤ 0.060
0.03 ≤ z ≤ 0.06
0.0055 ≤ p ≤ 0.0080
q = 0; and
b = 0.

In some embodiments:
0.95 ≤ a ≤ 1.05
0.85 ≤ x < 1
0.04 ≤ y ≤ 0.060
0.03 ≤ z ≤ 0.05
0.0055 ≤ p ≤ 0.0080
q = 0; and
b = 0.

In some embodiments, the particulate lithium nickel oxide material is a crystalline (or substantially crystalline) material. It may have the α-NaFeO₂-type structure. It may be a polycrystalline material, meaning that each particle of lithium nickel oxide material is made up of multiple crystallites (also known as crystal grains or primary particles) which are agglomerated together. The crystal grains are typically separated by grain boundaries. Where the particulate lithium nickel oxide is polycrystalline, it will be understood that the particles of lithium nickel oxide comprising multiple crystals are secondary particles.

The particulate lithium nickel oxide material of Formula I comprises an enriched surface, i.e. comprises a core material which has been surface modified (subjected to a surface modification process) to form an enriched surface layer. In some embodiments the surface modification results from contacting the core material with one or more further metal-containing compounds, and then optionally carrying out calcination of the material. The compounds may be in solution, and in such context herein the term "compound" refers to the corresponding dissolved species. For clarity, the discussions of the composition according to Formula I herein when in the context of surface-modified particles relate to the overall particle, i.e. the particle including the enriched surface layer.

Herein, the terms "surface modified", "enriched surface" and "enriched surface layer" refer to a particulate material which comprises a core material which has undergone a surface modification or surface enrichment process to increase the concentration of aluminium at or near to the surface of the particles. The term "enriched surface layer" therefore refers to a layer of material at or near to the surface of the particles which contains a greater concentration of aluminium than the remaining material of the particle, i.e. the core of the particle.

In some embodiments, the particle comprises a greater concentration of Al in the enriched surface layer than in the core. In some embodiments, all or substantially all of the Al in the particle is in the enriched surface layer. In some embodiments, the core does not contain Al or contains substantially no Al, for example less than 0.01 wt% Al based on the total particle weight. As used herein, the content of a given element in the surface enriched layer is calculated by determining the wt% of that element in the particulate lithium nickel oxide material prior to surface enrichment (sometimes referred to herein as the first calcined material or the core material) by ICP to give value A, determining the wt% of that element in the final particulate lithium nickel oxide material after surface enrichment (and optional further calcination) by ICP to give value B, and subtracting value A from value B. Similarly, the content of a given element in the core may be determined by determining the wt% of that element in the particulate lithium nickel oxide material prior to surface enrichment (sometimes referred to herein as the first calcined material or the core material) by ICP.

As the skilled person will understand, elements may migrate between the core and the surface layer during preparation, storage or use of the material. Herein, where an element is stated to be present in (or absent from, or present in certain quantities in) the core, this is to be understood to refer to that element being intentionally added to, (or excluded from, or added in a particular quantity to) the core, and is not intended to exclude from the scope of protection materials where the distribution of elements is altered by migration during preparation, storage or use. Similarly, where an element is stated to be present in (or absent from, or present in certain quantities in) the surface enriched layer, this is to be understood to refer to that element being intentionally added to, (or excluded from, or added in a particular quantity to) the surface enriched layer, and is not intended to exclude from the scope of protection materials where the distribution of elements is altered by migration during preparation, storage or use. For example, where all or substantially all of the Al in the particle is in the enriched surface layer, this means that all or substantially all of the Al is added in the surface enrichment step, but does not preclude materials where some of the Al added in the surface enrichment step has migrated into the core.

The inventors have found that including a surface modification or enriched surface layer which contains Al (e.g. by performing a surface modification step on the core material) provides a surface-modified material with improved properties, such as improved capacity retention. Furthermore, providing Al in the enriched surface layer permits the concomitant reduction of the amount of Co in the enriched surface layer providing comparable electrochemical properties. Furthermore, the inventors have found that providing Al in the surface enriched layer in combination with inclusion of Mg as a dopant as defined herein permits a reduction in the overall amount of Co in the particulate lithium nickel oxide material.

In some embodiments, the enriched surface layer comprises Al and optionally comprises one or more of Li and Co. In some embodiments, the enriched surface layer comprises Al and Li but does not contain Co or contains substantially no Co, for example less than 0.01 wt% Co based on the total particle weight. In some embodiments, the enriched surface layer comprises Al but does not contain Li or Co, or contains substantially no Li or Co, for example less than 0.01 wt% each of Li and Co, based on the total particle weight. In some embodiments, the enriched surface layer does not contain any magnesium or nickel, for example contains less than about 0.01 wt% each of magnesium and nickel. In some embodiments, the enriched surface layer contains aluminium and optionally cobalt and/or lithium, but does not contain any magnesium or nickel, for example contains less than about 0.01 wt% each of magnesium and nickel.

In some embodiments, the particulate lithium nickel oxide material contains magnesium in an amount of from about 0.40 wt% to about 1.50 wt%, based on the total weight of the particle. In some embodiments, all or substantially all of the magnesium is in the core of the particle. In some embodiments the enriched surface layer contains no magnesium or substantially no magnesium, for example less than 0.01 wt% Mg based on the total particle weight.

In some embodiments, the particulate lithium nickel oxide material contains cobalt in an amount of from about 2 wt% to about 4.5 wt%, based on the total weight of the particle, for example about 2.5 wt% to about 4 wt%.

In some embodiments, the particulate lithium nickel oxide material contains aluminium in an amount of from about 0.10 wt% to about 0.50 wt%, based on the total weight of the particle, for example from about 0.10 wt% to about 0.45 wt%, from about 0.10 wt% to about 0.40 wt%, from about 0.10 wt% to about 0.35 wt%, from about 0.10 wt% to about 0.30 wt%, from about 0.10 wt% to about 0.25 wt%, from about 0.10 wt% to about 0.20 wt%, from about 0.11 wt% to about 0.20 wt%, from about 0.12 wt% to about 0.20 wt%, from about 0.13 wt% to about 0.20 wt%, from about 0.13 wt% to about 0.19 wt%, from about 0.13 wt% to about 0.18 wt%, from about 0.14 wt% to about 0.18 wt% or from about 0.15 wt% to about 0.18 wt%. In some embodiments, the enriched surface layer of the particulate lithium nickel oxide material contains aluminium in such an amount. Materials containing aluminium in such quantities, particularly in the surface enriched layer, have been found to have good electrochemical properties including good capacity retention.

In some embodiments, the particulate lithium nickel oxide material of Formula I comprises a surface-modified structure comprising a core and an enriched surface layer at the surface of the core, wherein the particulate lithium nickel oxide material comprises at least about 0.50 wt% magnesium and the enriched surface layer of the material contains less than about 1.0 wt% cobalt, based on the total particle weight. In some embodiments, the magnesium is in the core of the material, i.e. the enriched surface layer does not include magnesium (or includes less than about 0.01 wt% magnesium). The inventors have found that at higher levels of doped magnesium in the core (for example, at least about 0.50 wt%), the material is stabilised resulting in an improvement of capacity retention when the amount of cobalt at the surface is reduced. In some embodiments, the core of the particulate lithium nickel oxide material comprises at least about 0.55 wt% magnesium, for example at least about 0.60 wt%, 0.65 wt%, 0.70 wt%, 0.75 wt%, 0.80 wt%, 0.85 wt% or 0.90 wt% and the enriched surface layer of the particulate lithium nickel oxide material contains less than about 1.0 wt% cobalt, for example less than about 0.9 wt%, 0.8 wt%, 0.7 wt%, 0.6 wt% or 0.5 wt%. In some embodiments at such levels of magnesium, the enriched surface layer of the particulate lithium nickel oxide material contains no cobalt or substantially no cobalt, for example less than 0.01 wt% cobalt. In some embodiments, 0.03 ≤ z ≤ 0.06 and the amount of cobalt in the enriched surface layer is less than about 1.0 wt% based on the total particle weight, for example less than about 0.9 wt%, 0.8 wt%, 0.7 wt%, 0.6 wt% or 0.5 wt%. In some embodiments:
0.95 ≤ a≤ 1.05
0.85 ≤ x < 1
0.03 < y ≤ 0.06
0.04 ≤ z ≤ 0.05
0.004 ≤ p ≤ 0.01
-0.2 ≤ b ≤ 0.2, and
q = 0.

The cobalt content in the surface enriched layer is calculated as set out above.

The inventors have also found that including cobalt in the enriched surface layer may provide some benefits including reducing the level of Li₂CO₃ on the surface of the material, for example to provide from 0 wt% to about 1.5 wt% Li₂CO₃.

In some embodiments, the ratio of the mass of material in the enriched surface layer to the mass of material in the core is from 0.01 to 0.04, for example from 0.01 to 0.03, from 0.01 to 0.025 or from 0.014 to 0.022.

In some embodiments the surface modification comprises immersion in a solution comprising aluminium species (for example in the form of an aluminium-containing compound), followed by drying of the surface-modified material and optionally calcination. The solution may additionally contain cobalt species (for example in the form of a cobalt-containing compound) and/or lithium species (for example in the form of a lithium-containing compound). In some embodiments, the solution is heated, for example to a temperature of at least 50 °C, for example at least 55 °C or at least 60 °C. In some embodiments, the surface-modified material is spray-dried after being contacted with the solution. In some embodiments, the surface-modified material is calcined after spray drying.

The particulate lithium nickel oxide material typically has a D50 particle size of at least 4 µm, e.g. at least 5 µm, at least 5.5 µm, at least 6.0 µm or at least 6.5 µm. The particles of lithium nickel oxide (e.g. secondary particles) typically have a D50 particle size of 20 µm or less, e.g. 15 µm or less or 12 µm or less. In some embodiments, the D50 particle size is from about 5 µm to about 20 µm, for example about 5 µm to about 19 µm, for example about 5 µm to about 18 µm, for example about 5 µm to about 17 µm, for example about 5 µm to about 16 µm, for example about 5 µm to about 15 µm, for example about 5 µm to about 12 µm, for example about 5.5 µm to about 12 µm, for example about 6 µm to about 12 µm, for example about 6.5 µm to about 12 µm, for example about 7 µm to about 12 µm, for example about 7.5 µm to about 12 µm. Unless otherwise specified herein, the D50 particle size refers to Dv50 (volume median diameter) and may be determined by using the method set out in ASTM B822 of 2017 under the Mie scattering approximation, for example using a Malvern Mastersizer 3000.

In some embodiments, the D10 particle size of the material is from about 0.1 µm to about 10 µm, for example about 1 µm to about 10 µm, about 2 µm to about 8 µm, or from about 5 µm to about 7 µm. Unless otherwise specified herein, the D10 particle size refers to Dv10 (10% intercept in the cumulative volume distribution) and may be determined by using the method set out in ASTM B822 of 2017 under the Mie scattering approximation, for example using a Malvern Mastersizer 3000.

In some embodiments, the D90 particle size of the material is from about 10 µm to about 40 µm, for example from about 12 µm to about 35 µm, about 12 µm to about 30 µm, about 15 µm to about 25 µm or from about 16 µm to about 20 µm. Unless otherwise specified herein, the D90 particle size refers to Dv90 (90% intercept in the cumulative volume distribution) and may be determined by using the method set out in ASTM B822 of 2017 under the Mie scattering approximation, for example using a Malvern Mastersizer 3000.

In some embodiments, the tapped density of the particulate lithium nickel oxide is from about 1.9 g/cm³ to about 2.8 g/cm³, e.g. about 1.9 g/cm³ to about 2.4 g/cm³.

The tapped density of the material can suitably be measured by loading a graduated cylinder with 25 mL of powder. The mass of the powder is recorded. The loaded cylinder is transferred to a Copley Tapped Density Tester JV Series. The material is tapped 2000 times and the volume re-measured. The re-measured volume divided by the mass of material is the recorded tap density.

The particulate lithium nickel oxide typically comprises less than 1.5 wt% of surface Li₂CO₃. It may comprise less than 1.4 wt% of surface Li₂CO₃, e.g. less than 1.3 wt%, less than 1.2 wt%, less than 1.1 wt%, less than 1.0 wt%, less than 0.9 wt%, less than 0.8 wt%, less than 0.7 wt% or less than 0.6 wt%. It may have 0 wt% surface Li₂CO₃, but in some embodiments there may be at least 0.01 wt%, 0.02 wt% or 0.04 wt% of surface Li₂CO₃.

The amount of surface Li₂CO₃ may be determined by titration with HCI using bromophenol blue indicator. Typically, a first titration step with HCI and phenolphthalein indicator is carried out before titration with bromophenol blue indicator to remove any lithium hydroxide. The titration protocol may include the following steps:
- Extract surface lithium carbonate from sample of particulate lithium nickel oxide material by agitating in deionised water for 5 minutes to provide an extractate solution, and separate extractate solution from residual solid;
- Add phenolphthalein indictor to the extractate solution, and titrate using HCI solution until extractate solution becomes clear (indicating the removal of any LiOH);
- Add bromophenol blue indictor to the extractate solution, and titrate using HCI solution until extractate solution turns yellow; (the amount of lithium carbonate in the extractate solution can be calculated from this titration step); and
- Calculate wt% of surface lithium carbonate in the sample of particulate lithium nickel oxide material, assuming 100% extraction of surface lithium carbonate into the extractate solution.

The materials may have a c-axis contraction within the material during the H2→H3 phase transition of less than 4.4%.

In some embodiments, the c-axis contraction is less than 3.8%, for example less than 3.5%, for example less than 3.2%, or example less than 3.0%, for example less than 2.8%, for example less than 2.75%. The c-axis contraction may be at least 1%, at least 1.5% or at least 2%. The c-axis contraction may be measured by the method set out in the Examples.

The particulate lithium nickel oxide of the invention is characterised by an improved capacity retention for cells which incorporate the material as a cathode, in particular a high retention of capacity after 50 cycles. When determined at a temperature of 23 °C in a half cell coin cell vs lithium, under a charge/discharge rate of 1C and voltage window of 3.0-4.3V, with an electrode loading of 9.0 mg/cm² and an electrode density of 3.0 g/cm³, it has been found that materials according to the invention may provide a capacity retention of greater than 94% after 50 cycles, and in some cases as high as around 98%. The % capacity retention after 50 cycles is defined as the capacity of the cell after the 50^{th} cycle as a percentage of the initial capacity of the cell after its first charge. For clarity, one cycle includes a complete charge and discharge of the cell. For example, 90% capacity retention means that after the 50^{th} cycle the capacity of the cell is 90% of the initial capacity.

An aspect of the invention is a lithium secondary cell or battery wherein the capacity retention of the cell or battery after 50 cycles at 23 °C and a 1C charge/discharge rate and a voltage window of 3.0-4.3V is at least 93%.

The material may have a capacity retention (after 50 cycles in a half cell coin cell vs Li, at an electrode loading of 9.0 mg/cm² and an electrode density of 3.0 g/cm³, tested at 23 °C and a 1C charge/discharge rate and voltage window of 3.0-4.3V) of at least 93%.

In some embodiments, the capacity retention is at least 94%, for example at least 95%, for example at least 96%, for example at least 97%.

Materials of the invention are also characterised by a surprisingly low direct current internal resistance (DCIR). DCIR tends to increase over time as the secondary cell or battery is cycled. It has been found that materials according to the invention provide a % increase in DCIR of less than 50% after 50 cycles, and in some cases an increase as low as 24%, when tested at a temperature of 23 °C in a half cell coin cell vs lithium, under a charge/discharge rate of 1C and voltage window of 3.0-4.3V, with an electrode loading of 9.0 mg/cm² and an electrode density of 3.0 g/cm³.

The material may have a % increase in DCIR (after 50 cycles in a half cell coin cell vs Li, at an electrode loading of 9.0 mg/cm² and an electrode density of 3.0 g/cm³, tested at 23°C and a 1C charge/discharge rate and voltage window of 3.0-4.3V) of less than 50%. In some embodiments, the % increase in DCIR is less than 45%, for example less than 40%, for example less than 35%, for example less than 30%, for example less than 25%.

Materials of the invention are also characterised by a high specific capacity. It has been found that materials according to the invention when tested in a cell at 23 °C, a 1C discharge rate and a voltage window of 3.0-4.3V, with an electrode loading of 9.0 mg/cm² and an electrode density of 3.0 g/cm³ in a half call coin cell vs Li metal, provide a specific capacity of at least 160 mAh/g, in some cases as high as 190 mAh/g. This high specific capacity in combination with the high capacity retention on cycling provides a cell or battery of improved performance with an extended usable lifetime which is useful in high performance applications such as in electric vehicles.

The material may have a specific capacity when tested in a cell at 23 °C, a 1C discharge rate and a voltage window of 3.0-4.3V, with an electrode loading of 9.0 mg/cm² and an electrode density of 3.0 g/cm³ in a half call coin cell vs Li metal of at least 180 mAh/g. In some embodiments, the specific capacity is at least 190 mAh/g, for example at least 200 mAh/g.

The process for preparing the particulate lithium nickel oxide typically comprises the steps of:
mixing lithium-containing compound with a nickel-containing compound, a cobalt-containing compound, a magnesium-containing compound and optionally an M-containing compound and/or an aluminium containing compound, wherein a single compound may optionally contain two or more of Ni, Co, Mg, Al and M, to obtain a mixture;
calcining the mixture to obtain a first calcined material; and
contacting the first calcined material with an aluminium-containing compound and optionally one or more of a cobalt-containing compound, a lithium-containing compound and an M-containing compound in a surface-modification step to form an enriched surface layer on the first calcined material;
wherein M is selected from Mn, V, Ti, B, Zr, Sr, Ca, Cu , Sn, Cr, Fe, Ga, Si, W, Mo, Ta, Y, Sc, Nb, Pb, Ru, Rh and Zn and combinations thereof.

In some embodiments, the first calcined material is a core material having Formula II:

Liₐ₁Niₓ₁Co_{y1}Mg_{z1}Alₚ₁M_{q1}O_{2+b1} Formula II

in which:
0.8 ≤ a1 ≤ 1.2
0.8 ≤ x1 < 1
0.02 ≤ y1 ≤ 0.078
0.017 ≤ z1 ≤ 0.1
0 ≤ p1 ≤ 0.01
0 ≤ q1 ≤ 0.2, and
-0.2 ≤ b1 ≤ 0.2;
wherein M is selected from Mn, V, Ti, B, Zr, Sr, Ca, Cu , Sn, Cr, Fe, Ga, Si, W, Mo, Ta, Y, Sc, Nb, Pb, Ru, Rh and Zn and combinations thereof.

In some embodiments, p1 = 0, such that the core material has the following formula:

Liₐ₁Niₓ₁CO_{y1}Mg_{z1}M_{q1}O_{2+b1}

In some embodiments, the process includes a further calcination step after the surface modification step.

In some embodiments q1 = 0.

The lithium-containing compound may be selected from lithium hydroxide (e.g. LiOH or LiOH.H₂O), lithium carbonate (Li₂CO₃), and hydrated forms thereof. Lithium hydroxide may be particularly preferred.

The nickel-containing compound may be selected from nickel hydroxide (Ni(OH)₂), nickel oxide (NiO), nickel oxyhydroxide (NiOOH), nickel sulfate, nickel nitrate, nickel acetate and hydrated forms thereof. Nickel hydroxide may be particularly preferred.

The cobalt-containing compound may be selected from cobalt hydroxide (Co(OH)₂), cobalt oxide (CoO, Co₂O₃, Co₃O₄), cobalt oxyhydroxide (CoOOH), cobalt sulfate, cobalt nitrate, cobalt acetate and hydrated forms thereof. Cobalt hydroxide may be particularly preferred.

The magnesium-containing compound may be selected from magnesium hydroxide (Mg(OH)₂), magnesium oxide (MgO), magnesium sulfate, magnesium nitrate, magnesium acetate and hydrated forms thereof. Magnesium hydroxide may be particularly preferred.

The M-containing compound may be selected from M hydroxide, M oxide, M nitrate, M sulfate, M carbonate or M acetate and hydrated forms thereof. M hydroxide may be particularly preferred.

Alternatively, two or more of nickel, cobalt, magnesium and optionally M may be provided as a mixed metal hydroxide, e.g. a mixed nickel cobalt hydroxide or a mixed nickel cobalt M hydroxide. The mixed metal hydroxide may be a coprecipitated hydroxide. It may be polycrystalline.

The mixed metal hydroxide may have a composition according to Formula III:

NiₓCo_{y}Mg_{z}M_{q}(OH)_{2+b} Formula III

in which x, y, z, q and b are each independently as defined herein. If a cobalt enrichment step is carried out (as described below), it may be preferred that the value for y in Formula III is less than the value for y in Formula I.

Such mixed metal hydroxides may be prepared by co-precipitation methods well-known to the person skilled in the art. These methods may involve the co-precipitation of the mixed metal hydroxide from a solution of metal salts, such as metal sulfates, for example in the presence of ammonia and a base, such as NaOH. In some cases suitable mixed metal hydroxides may be obtainable from commercial suppliers known to the skilled person.

The calcination step may be carried out at a temperature of at least 400 °C, at least 500 °C, at least 600°C or at least 650 °C. The calcination step may be carried out at a temperature of 1000 °C or less, 900°C or less, 800°C or less or 750 °C or less. The material to be calcined may be at a temperature of 400 °C, at least 500 °C, at least 600°C or at least 650 °C for a period of at least 2 hours, at least 5 hours, at least 7 hours or at least 10 hours. The period may be less than 24 hours.

The calcination step may be carried out under a CO₂-free atmosphere. For example, CO₂-free air may be flowed over the materials to be calcined during calcination and optionally during cooling. The CO₂-free air may, for example, be a mix of oxygen and nitrogen. The CO₂-free atmosphere may be oxygen (e.g. pure oxygen). Preferably, the atmosphere is an oxidising atmosphere. As used herein, the term "CO₂-free" is intended to include atmospheres including less than 100 ppm CO₂, e.g. less than 50 ppm CO₂, less than 20 ppm CO₂ or less than 10 ppm CO₂. These CO₂ levels may be achieved by using a CO₂ scrubber to remove CO₂.

In some embodiments, the CO₂-free atmosphere comprises a mixture of O₂ and N₂. In some embodiments, the mixture comprises a greater amount of N₂ than O₂. In some embodiments, the mixture comprises N₂ and O₂ in a ratio of from 50:50 to 90:10, for example from 60:40 to 90:10, for example about 80:20.

In some embodiments, the particulate lithium nickel oxide material of Formula I comprises a surface-modified structure comprising a core and an enriched surface layer at the surface of the core, resulting from performing a surface-modification step on a core material having Formula II:

Liₐ₁Niₓ₁Co_{y1}Mg_{z1}Alₚ₁M_{q1}O_{2+b1} Formula II

in which:
0.8 ≤ a1 ≤ 1.2
0.8 ≤ x1 < 1
0.02 ≤ y1 ≤ 0.078
0.017 ≤ z1 ≤ 0.1
0 ≤ p1 ≤ 0.01
0 ≤ q1 ≤ 0.2, and
-0.2 ≤ b1 ≤ 0.2;
wherein M is selected from Mn, V, Ti, B, Zr, Sr, Ca, Cu , Sn, Cr, Fe, Ga, Si, W, Mo, Ta, Y, Sc, Nb, Pb, Ru, Rh and Zn and combinations thereof.

The surface modification step may comprise contacting the core material with an aluminium-containing compound and optionally one or more of a cobalt-containing compound, a lithium-containing compound and an M-containing compound. The aluminium-containing compound and optional cobalt-containing compound, lithium-containing compound and M-containing compound may be provided in solution, for example in aqueous solution.

In some embodiments, p1 = 0, such that the core material has the following formula:

Liₐ₁Niₓ₁Co_{y1}Mg_{z1}M_{q1}O_{2+b1}

In some embodiments q1 = 0.

The surface-modification step of the processes of the invention (also referred to herein as a surface enrichment step) comprises contacting the core material with aluminium, to increase the concentration of aluminium in the grain boundaries and/or at or near to the surface of the particles. In some embodiments, the surface-modification step (also referred to herein as a surface enrichment step) comprises contacting the core material with additional metal selected from one or more of cobalt, lithium and M, to increase the concentration of such metal in the grain boundaries and/or at or near to the surface of the particles. The surface modification may be carried out by contacting a core material with an aluminium-containing compound and optionally one or more further metal-containing compounds. For example, the compounds may be independently selected from nitrates, sulfates or acetates. Nitrates may be particularly preferred. The compounds may be provided in solution (e.g. aqueous solution). The compounds may be soluble in water.

The mixture of the core material with the aluminium-containing compound and optionally one or more further metal-containing compounds may be heated, for example to a temperature of at least 40 °C, e.g. at least 50 °C. The temperature may be less than 100 °C or less than 80 °C. Where the aluminium-containing compound and optional one or more further metal-containing compounds is provided in solution, the mixture of the solution with the intermediate may be dried, e.g. by evaporation of the solvent or by spray drying.

The aluminium-containing compound and optional one or more further metal-containing compounds may be provided as a composition, referred to herein as a "surface modification composition". The surface modification composition may comprise a solution of the aluminium-containing compound and optional one or more further metal-containing compounds (e.g. aqueous solution).

The surface modification composition may comprise an aluminium-containing compound and optionally one or more of a lithium-containing compound, a cobalt-containing compound and an M-containing compound. The surface modification composition may comprise an aluminium-containing compound and optionally one or more of a lithium-containing compound and a cobalt-containing compound. The surface modification composition may comprise an aluminium-containing compound, a cobalt-containing compound and optionally a lithium-containing compound. The surface modification composition may comprise an aluminium-containing compound as the sole metal-containing compound (i.e. thereby lacking a lithium-containing compound, a cobalt-containing compound and an M-containing compound).

In some embodiments, the metal-containing compounds in the surface modification composition consist of an aluminium-containing compound and optionally one or more of a lithium-containing compound and a cobalt-containing compound. In some embodiments, the metal-containing compounds in the surface modification composition consist of an aluminium-containing compound, a lithium-containing compound and a cobalt-containing compound. In some embodiments, the metal-containing compounds in the surface modification composition consist of an aluminium-containing compound and optionally a cobalt-containing compound. In some embodiments, the metal-containing compounds in the surface modification composition consist of an aluminium-containing compound.

The cobalt-containing compound, the aluminium-containing compound, lithium-containing compound and M-containing compound used in the surface modification step may be as defined above with reference to the cobalt-containing compound, the aluminium-containing compound, the lithium-containing compound and the M-containing compound used in the formation of the intermediate (core) material. It may be particularly preferred that the aluminium-containing compound and each of the one or more further metal-containing compounds is a metal-containing nitrate. It may be particularly preferred that the aluminium-containing compound is aluminium nitrate. It may be particularly preferred that the lithium-containing compound is lithium nitrate. It may be particularly preferred that the cobalt-containing compound is cobalt nitrate. It may be preferred that the cobalt-containing compound, the further aluminium-containing compound and the further lithium-containing compound are soluble in water.

In some embodiments, the surface modification step comprises contacting the core material with additional metal-containing compounds in an aqueous solution. The core material may be added to the aqueous solution to form a slurry or suspension. In some embodiments the slurry is agitated or stirred. In some embodiments, the weight ratio of core material to water in the slurry after addition of the core material to the aqueous solution is from about 1.5:1 to about 1:1.5, for example from about 1.4:1 to about 1:1.4, about 1.3:1 to about 1:1.3, about 1.2:1 to about 1:1.2 or about 1.1:1 to about 1:1.1. The weight ratio may be about 1:1.

Typically, the surface modification step is carried out after the first calcination step described above.

The surface modification step may be followed by a second calcination step. The second calcination step may be carried out at a temperature of at least 400 °C, at least 500 °C, at least 600°C or at least 650 °C. The second calcination step may be carried out at a temperature of 1000 °C or less, 900°C or less, 800°C or less or 750 °C or less. The material to be calcined may be at a temperature of 400 °C, at least 500 °C, at least 600°C or at least 650 °C for a period of at least 30 minutes, at least 1 hour or at least 2 hours. The period may be less than 24 hours. The second calcination step may be shorter than the first calcination step.

The second calcination step may be carried out under a CO₂-free atmosphere as described above with reference to the first calcination step.

The process may include one or more milling steps, which may be carried out after the first and/or second calcination steps. The nature of the milling equipment is not particularly limited. For example, it may be a ball mill, a planetary ball mill or a rolling bed mill. The milling may be carried out until the particles (e.g. secondary particles) reach the desired size. For example, the particles of lithium nickel oxide (e.g. secondary particles) are typically milled until they have a D50 particle size of at least 5 µm, e.g. at least 5.5 µm, at least 6 µm or at least 6.5 µm. The particles of lithium nickel oxide (e.g. secondary particles) are typically milled until they have a D50 particle size of 15 µm or less, e.g. 14 µm or less or 13 µm or less.

The process of the present invention may further comprise the step of forming an electrode (typically a cathode) comprising the lithium nickel oxide material. Typically, this is carried out by forming a slurry of the particulate lithium nickel oxide, applying the slurry to the surface of a current collector (e.g. an aluminium current collector), and optionally processing (e.g. calendaring) to increase the density of the electrode. The slurry may comprise one or more of a solvent, a binder, carbon material and further additives.

Typically, the electrode of the present invention will have an electrode density of at least 2.5 g/cm³, at least 2.8 g/cm³ or at least 3 g/cm³. It may have an electrode density of 4.5 g/cm³ or less, or 4 g/cm³ or less. The electrode density is the electrode density (mass/volume) of the electrode, not including the current collector the electrode is formed on. It therefore includes contributions from the active material, any additives, any additional carbon material, and any remaining binder.

The process of the present invention may further comprise constructing a battery or electrochemical cell including the electrode comprising the lithium nickel oxide. The battery or cell typically further comprises an anode and an electrolyte. The battery or cell may typically be a secondary (rechargeable) lithium (e.g. lithium ion) battery.

The present invention will now be described with reference to the following examples, which are provided to assist with understanding the present invention, and are not intended to limit its scope.

### Examples

### Comparative Example 1 - Preparation of base materials

### Comparative Example 1A - Base 1 (Li_{1.030}Ni_{0.953}Co_{0.030}Mg_{0.010}O₂)

100 g Ni_{0.960}Co_{0.031}Mg_{0.099}(OH)₂ and 26.36 g LiOH were dry mixed in a poly-propylene bottle for 30 mins. The LiOH was pre-dried at 200 °C under vacuum for 24 hours and kept dry in a purged glovebox filled with dry N₂.

The powder mixture was loaded into 99%+ alumina crucibles and calcined under an artificial CO₂-free air mix which was 80:20 N₂:O₂. Calcination was performed as follows: to 450 °C (5 °C/min) with 2 hours hold, ramp to 700 °C (2 °C/min) with a 6 hour hold and cooled naturally to 130 °C. The artificial air mix was flowing over the powder bed throughout the calcination and cooling. The title compound was thereby obtained.

The samples were then removed from the furnace at 130 °C and transferred to a high-alumina lined mill pot and milled on a rolling bed mill until D₅₀ was between 12.0 and 12.5 µm.

D₅₀ was measured according to ASTM B822 of 2017 using a Malvern Mastersizer 3000 under the Mie scattering approximation and was found to be 9.5 µm. The chemical formula of the material was determined by ICP analysis to be Li_{1.030}Ni_{0.953}Co_{0.030}Mg_{0.010}O₂.

### Comparative Example 1B - Base 2 (Li_{1.019}Ni_{0.949}Co_{0.031}Mg_{0.020}O₂)

The procedure according to Comparative Example 1A was repeated except that 26.21 g of LiOH were dry mixed with 100 g Ni_{0.948}Co_{0.031}Mg_{0.021}(OH)₂. The title compound was thereby obtained. D₅₀ was found to be 10.2 µm. The chemical formula of the material was determined by ICP analysis to be Li_{1.019}Ni_{0.949}Co_{0.031}Mg_{0.020}O₂

### Comparative Example 1C-Base 3 (Li_{1.027}Ni_{0.923}Co_{0.049}Mg_{0.029}O₂)

The procedure according to Comparative Example 1A was repeated except that 24.8 g of LiOH were dry mixed with 100 g Ni_{0.917}Co_{0.050}Mg_{0.033}(OH)₂. The title compound was thereby obtained. D₅₀ was found to be 9.65 µm. The chemical formula of the material was determined by ICP analysis to be Li_{1.027}Ni_{0.923}Co_{0.049}Mg_{0.029}O₂.

### Comparative Example 1D - Base 4 (Li_{1.007}Ni_{0.923}Co_{0.049}Mg_{0.038}O₂)

The procedure according to Comparative Example 1A was repeated except that 25.92 g of LiOH were dry mixed with 100 g Ni_{0.915}Co_{0.049}Mg_{0.036}(OH)₂. The title compound was thereby obtained. D₅₀ was found to be 12.2 µm. The chemical formula of the material was determined by ICP analysis to be Li_{1.007}Ni_{0.923}Co_{0.049}Mg_{0.038}O₂.

### Comparative Example 1E- Base 5 (Li_{0.998}Ni_{0.917}Co_{0.049}Mg_{0.052}O₂)

The procedure according to Comparative Example 1A was repeated except that 25.75 g of LiOH were dry mixed with 100 g Ni_{0.903}Co_{0.048}Mg_{0.049}(OH)₂. The title compound was thereby obtained. The chemical formula of the material was determined by ICP analysis to be Li_{0.998}Ni_{0.917}Co_{0.049}Mg_{0.052}O₂.

### Comparative Example 1F - Base 6 (Li_{1.024}Ni_{0.926}Co_{0.045}Mg_{0.037}O₂)

The procedure according to Comparative Example 1A was repeated except that 25.94 g of LiOH were dry mixed with 100 g Ni_{0.918}Co_{0.045}Mg_{0.037}(OH)₂. The title compound was thereby obtained. D₅₀ was found to be 9.0 µm. The chemical formula of the material was determined by ICP analysis to be Li_{1.024}Ni_{0.926}Co_{0.045}Mg_{0.037}O₂.

### Comparative Example 1G - Base 7 (Li₁.₀₀₃Ni_{0.956}Co_{0.030}Mg_{0.020}O₂)

The procedure according to Comparative Example 1A was repeated except that 26.20 g of LiOH were dry mixed with 100 g Ni_{0.952}Co_{0.029}Mg_{0.019}(OH)₂. The title compound was thereby obtained. D₅₀ was found to be 9.6 µm. The chemical formula of the material was determined by ICP analysis to be Li_{1.003}Ni_{0.956}Co_{0.030}Mg_{0.020}O₂.

### Comparative Example 1H - Base 8 (Li_{1.009}Ni_{0.957}Co_{0.030}Mg_{0.015}O₂)

The procedure according to Comparative Example 1A was repeated except that 26.29 g of LiOH were dry mixed with 100 g Ni_{0.957}Co_{0.029}Mg_{0.014}(OH)₂. The title compound was thereby obtained. D₅₀ was found to be 9.3 µm. The chemical formula of the material was determined by ICP analysis to be Li_{1.009}Ni_{0.957}Co_{0.030}Mg_{0.015}O₂.

### Comparative Example 1J - Base 9 (Li_{1.005}Ni_{0.944}Co_{0.029}Mg_{0.038}O₂)

The procedure according to Comparative Example 1A was repeated except that 25.96 g of LiOH were dry mixed with 100 g Ni_{0.935}Co_{0.029}Mg_{0.037}(OH)₂. The title compound was thereby obtained. D₅₀ was found to be 10.7 µm. The chemical formula of the material was determined by ICP analysis to be Li_{1.005}Ni_{0.944}Co_{0.029}Mg_{0.038}O₂.

### Comparative Example 1K - Base 10 (Li_{0.996}Ni_{0.914}Co_{0.053}Mg_{0.051}O₂)

The procedure according to Comparative Example 1A was repeated except that 25.75 g of LiOH were dry mixed with 100 g Ni_{0.900}Co_{0.053}Mg_{0.048}(OH)₂. The title compound was thereby obtained. D₅₀ was found to be 9.49 µm. The chemical formula of the material was determined by ICP analysis to be Li_{0.996}Ni_{0.914}Co_{0.053}Mg_{0.051}O₂.

Bases 12 to 20, listed in Table 3 below, were made by an analogous process to Bases 1 to 10.

### Example 1 - Preparation of surface-modified materials

### Example 1A - Compound 1 (Li_{1.018}Ni_{0.930}Co_{0.049}Mg_{0.010}Al_{0.006}O₂)

The product of Comparative Example 1A was sieved through a 53 µm sieve and transferred to a N₂-purged glovebox. An aqueous solution containing 5.91 g Co(NO₃)₂.6H₂O, 0.47 g LiNO₃ and 2.44 g Al(NO₃)₃.9H₂O in 100 mL water was heated to between 60 and 65 °C. 100 g of the sieved powder was added rapidly while stirring vigorously. The slurry was stirred at a temperature between 60 and 65 °C until the supernatant was colourless. The slurry was then spray-dried.

After spray-drying powders were loaded into 99%+ alumina crucibles and calcined under an artificial CO₂-free air mix which was 80:20 N₂:O₂. Calcination was performed as follows: ramp to 130 °C (5 °C/min) with 5.5 hours hold, ramp to 450 °C (5 °C/min) with 1 hour hold, ramp to 700 °C (2 °C/min) with a 2 hours hold and cooled naturally to 130°C. The artificial air mix was flowing over the powder bed through the calcination and cooling. The title compound was thereby obtained.

The samples were then removed from the furnace at 130 °C and transferred to a purged N₂-filled glove-box.

The sample was milled in a high-alumina lined mill pot on a rolling bed mill. The target end point of the milling was when D₅₀ was between 10 and 11 µm ; D₅₀ was measured after milling and found to be 9.5 µm. The sample was passed through a 53 µm sieve and stored in a purged N₂ filledglove-box. The water content of the material was 0.18 wt%. The chemical formula of the material was determined by ICP analysis to be Li_{1.018}Ni_{0.930}Co_{0.049}Mg_{0.010}Al_{0.006}O₂.

### Example 1B - Compound 2 (Li_{1.002}Ni_{0.927}Co_{0.053}Mg_{0.020}Al_{0.0065}O₂)

The product of Comparative Example 1B was subjected to the procedure set out under Example 1A, except that the aqueous solution contained 5.90 g Co(NO₃)₂.6H₂O, 0.47 g LiNO₃ and 2.43 g Al(NO₃)₃.9H₂O in 100 mL water. The title compound was thereby obtained. D₅₀ was found to be 8.5 µm. The water content of the material was 0.28 wt%.

The chemical formula of the material was determined by ICP analysis to be Li_{1.002}Ni_{0.927}Co_{0.053}Mg_{0.020}Al_{0.0065}O₂.

### Example 1C - Compound 3 (Li_{0.995}Ni_{0.909}Co₀.₀₆₈Mg_{0.027}Al_{0.0065}O₂)

The product of Comparative Example 1C was subjected to the procedure set out under Example 1A, except that the aqueous solution contained 5.89 g Co(NO₃)₂.6H₂O, 0.46 g LiNO₃ and 2.43 g Al(NO₃)₃.9H₂O in 100 mL water. The title compound was thereby obtained. D₅₀ was found to be 7.61 µm. The water content of the material was 0.2 wt%. The chemical formula of the material was determined by ICP analysis to be Li_{0.995}Ni_{0.909}Co_{0.068}Mg_{0.027}Al_{0.0065}O₂.

### Example 1D- Compound 4 (Li_{0.985}Ni_{0.913}Co_{0.061}Mg_{0.037}Al_{0.0069}O₂)

The product of Comparative Example 1D was subjected to the procedure set out under Example 1A, except that the aqueous solution contained 3.94 g Co(NO₃)₂.6H₂O and 2.43 g Al(NO₃)₃.9H₂O in 100 mL water, but did not contain any LiNO₃. The title compound was thereby obtained. D₅₀ was found to be 11.7 µm. The water content of the material was 0.26 wt%. The chemical formula of the material was determined by ICP analysis to be Li_{0.985}Ni_{0.913}Co_{0.061}Mg_{0.037}Al_{0.0069}O₂.

### Example 1E- Compound 5 (Li_{0.980}Ni_{0.905}Co_{0.061}Mg_{0.051}Al_{0.0065}O₂)

The product of Comparative Example 1E was subjected to the procedure set out under Example 1A, except that the aqueous solution contained 3.93 g Co(NO₃)₂.6H₂O and 2.42 g Al(NO₃)₃.9H₂O in 100 mL water, but did not contain any LiNO₃. The title compound was thereby obtained. D₅₀ was found to be 10.7 µm. The water content of the material was 0.09 wt%. The chemical formula of the material was determined by ICP analysis to be Li_{0.980}Ni_{0.905}Co_{0.061}M_{g0.051}Al_{0.0065}O₂.

### Example 1F - Compound 6 (Li_{1.003}Ni_{0.923}Co_{0.045}Mg_{0.038}Al_{0.0062}O₂)

The product of Comparative Example 1F was subjected to the procedure set out under Example 1A, except that the aqueous solution contained 2.43 g Al(NO₃)₃.9H₂O in 100 mL water, but did not contain any Co(NO₃)₂.6H₂O or LiNO₃. The title compound was thereby obtained. D₅₀ was found to be 7.5 µm. The water content of the material was 0.18 wt%. The chemical formula of the material was determined by ICP analysis to be Li₁.₀₀₃Ni_{0.923}Co_{0.045}Mg_{0.038}Al_{0.0062}O₂.

### Example 1G - Compound 7 (Li_{0.997}Ni_{0.952}Co_{0.029}Mg_{0.019}Al_{0.0065}O₂)

The product of Comparative Example 1G was subjected to the procedure set out under Example 1A, except that the aqueous solution contained 2.44 g Al(NO₃)₃.9H₂O in 100 mL water, but did not contain any Co(NO₃)₂.6H₂O or LiNO₃. The title compound was thereby obtained. D₅₀ was found to be 7.9 µm. The water content of the material was 0.29 wt%. The chemical formula of the material was determined by ICP analysis to be Li_{0.997}Ni_{0.952}Co_{0.029}Mg_{0.019}Al_{0.0065}O₂.

### Example 1H - Compound 8 (Li_{1.002}Ni_{0.919}Co_{0.064}Mg_{0.14}Al_{0.0062}O₂)

The product of Comparative Example 1H was subjected to the procedure set out under Example 1A, except that the aqueous solution contained 11.82 g Co(NO₃)₂.6H₂O, 1.88 g LiNO₃ and 2.44 g Al(NO₃)₃.9H₂O in 100 mL water. The title compound was thereby obtained. D₅₀ was found to be 8.2 µm. The water content of the material was 0.29 wt%. The chemical formula of the material was determined by ICP analysis to be Li_{1.002}Ni_{0.919}Co_{0.064}Mg_{0.014}Al_{0.0062}O₂.

### Example 1J- Compound 9 (Li_{0.980}Ni_{0.909}Co_{0.066}Mg_{0.037}Al_{0.066}O₂)

The product of Comparative Example 1J was subjected to the procedure set out under Example 1A, except that the aqueous solution contained 11.77 g Co(NO₃)₂.6H₂O, 1.87 g LiNO₃ and 2.44 g Al(NO₃)₃.9H₂O in 100 mL water. The title compound was thereby obtained. D₅₀ was found to be 10.0 µm. The water content of the material was 0.08 wt%. The chemical formula of the material was determined by ICP analysis to be Li_{0.980}Ni_{0.909}Co_{0.066}Mg_{0.037}Al_{0.0066}O₂.

### Example 1K - Compound 10 (Li_{0.987}Ni_{0.900}Co_{0.064}Mg_{0.051}Al_{0.0065}O₂)

The product of Comparative Example 1K was subjected to the procedure set out under Example 1A, except that the aqueous solution contained 3.93 g Co(NO₃)₂.6H₂O and 2.42 g Al(NO₃)₃.9H₂O in 100 mL water, but did not contain any LiNO₃. The title compound was thereby obtained. D₅₀ was found to be 9.4 µm. The water content of the material was 0.17 wt%. The chemical formula of the material was determined by ICP analysis to be Li_{0.987}Ni_{0.900}Co_{0.064}Mg_{0.051}Al_{0.0065}O₂.

### Example 1L- Compound 11 (Li_{0.984}Ni_{0.877}Co_{0.115}Mg_{0.010}Al_{0.0066}O₂)

100 g Ni_{0.905}Co_{0.084}Mg_{0.010}(OH)₂ and 26.33 g LiOH were dry mixed in a poly-propylene bottle for 1 hour. The LiOH was pre-dried at 200 °C under vacuum for 24 hours and kept dry in a glovebox purged with dry N₂.

The powder mixture was loaded into 99%+ alumina crucibles and calcined under an artificial CO₂ free air mix which was 80:20 N₂:O₂. Calcination was performed as follows: to 450 °C (5 °C/min) with 2 hours hold, ramp to 700 °C (2 °C/min) with a 6 hour hold and cooled naturally to 130 °C. The artificial air mix was flowing over the powder bed throughout the calcination and cooling.

The samples were then removed from the furnace at 130 °C and transferred to a purged N₂ filled glove-box. The sample was transferred to a high-alumina lined mill pot and milled on a rolling bed mill until D₅₀ was between 12.0 - 12.5 µm.

After milling, the product was sieved through a 53 µm sieve and transferred to a purged N₂ filled glovebox. An aqueous solution containing 11.83 g CO(NO₃)₂.6H₂O, 1.88 g LiNO₃ and 2.44 g Al(NO₃)₃.9H₂O in 100 mL water was heated to between 60 and 65 °C. 100 g of the sieved powder was added rapidly while stirring vigorously. The slurry was stirred at a temperature between 60 and 65 °C until the supernatant was colourless. The slurry was then spray-dried.

After spray-drying powders were loaded into 99%+ alumina crucibles and calcined under an artificial CO₂ free air mix which was 80:20 N₂:O₂. Calcination was performed as follows: ramp to 130°C (5 °C/min) with 5.5 hours hold, ramp to 450°C (5 °C/min) with 1 hour hold, ramp to 700°C (2 °C/min) with a 2 hours hold and cooled naturally to 130°C. The artificial air mix was flowing over the powder bed through the calcination and cooling. The title compound was thereby obtained.

The samples were then removed from the furnace at 130 °C and transferred to a N₂ filled glove-box.

The sample was milled in a high-alumina lined mill pot on a rolling bed mill. The end point of the milling was when D50 was between 10 and 11 µm ; D₅₀ was measured after milling and found to be 8.8 µm. The sample was passed through a 53 µm sieve and stored in a purged N₂ filled glove-box.

The water content of the material was 0.4 wt%. The chemical formula of the material was determined by ICP analysis to be Li_{0.984}Ni_{0.877}Co_{0.115}Mg_{0.010}Al_{0.0066}O₂.

Compounds 12 to 20, listed in Table 3 below, were made by an analogous process to Compounds 1 to 10, using the following bases:

**Table 1**

| ***Compound*** | ***Base*** |
|---|---|
| Compound 12 | Base 12 |
| Compound 13 | Base 13 |
| Compound 14 | Base 14 |
| Compound 15 | Base 15 |
| Compound 16 | Base 16 |
| Compound 17a | Base 17 |
| Compound 17b | Base 17 |
| Compound 18a | Base 18 |
| Compound 18b | Base 18 |
| Compound 19 | Base 19 |
| Compound 20 | Base 20 |

### Li₂CO₃ Content

Surface Li₂CO₃ content in samples was determined using a two-stage titration with phenolphthalein and bromophenol blue. For the titration, surface lithium carbonate was extracted from a sample of each material by agitating in deionised water for 5 minutes to provide an extractate solution, the extractate solution was separated from residual solid. Phenolphthalein indictor was added to the extractate solution, and the extracted solution was titrated using HCI solution until the extractate solution became clear (indicating the removal of any LiOH). Bromophenol blue indictor was added to the extractate solution, and the extracted solution titrated using HCI solution until the extractate solution turned yellow. The amount of lithium carbonate in the extractate solution was be calculated from this bromophenol titration step, the wt% of surface lithium carbonate in each sample was calculated assuming 100% extraction of surface lithium carbonate into the extractate solution.

The results for the materials tested were as set out in Table 2:

**Table 2**

| ***Material*** | ***Li₂CO₃ content (wt%)*** |
|---|---|
| Compound 1 | 0.28 |
| Compound 2 | 0.26 |
| Compound 3 | 0.16 |
| Compound 4 | 0.36 |
| Compound 5 | 0.41 |
| Compound 6 | 0.40 |
| Compound 7 | 0.53 |
| Compound 8 | 0.19 |
| Compound 9 | 0.15 |
| Compound 10 | 0.31 |
| Compound 11 | 0.19 |
| Compound 12 | 0.1 |
| Compound 13 | 0.89 |
| Compound 14 | 0.23 |
| Compound 15 | 0.16 |
| Compound 16 | 0.18 |
| Compound 17a | 0.19 |
| Compound 17b | 1.02 |
| Compound 18a | 0.19 |
| Compound 18b | 0.918 |
| Compound 19 | 0.11 |
| Compound 20 | 0.61 |

### Compositional analysis

The total magnesium and cobalt contents (weight % based on the total particle weight) in the Comparative and Inventive materials was determined by ICP and is given in Table 3 below.

The surface cobalt content was calculated by subtracting the ICP wt% Co in the base material from the ICP wt% Co in the final material. The core cobalt content is taken as the ICP wt% Co in the base material.

### ICP (Inductively Coupled Plasma)

The elemental composition of the compounds was measured by ICP-OES. For that, 0.1 g of material are digested with aqua regia (3:1 ratio of hydrochloric acid and nitric acid) at ~130°C and made up to 100 mL. The ICP-OES analysis was carried out on an Agilent 5110 using matrix matched calibration standards and yttrium as an internal standard. The lines and calibration standards used were instrument-recommended.

### Electrochemical Testing

Electrodes were made in a 94:3:3 active:carbon:binder formulation with an ink at 65 % solids. 0.6 g of SuperC65 carbon was mixed with 5.25 g of N-methyl pyrrolidone (NMP) on a Thinky® mixer. 18.80 g of active material was added and further mixed using the Thinky® mixer. Finally, 6.00 g of Solef® 5130 binder solution (10 wt% in NMP) was added and mixed in the Thinky mixer. The resulting ink was cast onto aluminium foils using a 125 µm fixed blade coater and dried at 120 °C for 60 minutes. Once dry, the electrode sheet was calendared in an MTI calendar to achieve a density of 3 g/cm³. Individual electrodes were cut and dried under vacuum overnight before transferring to an argon filled glovebox. Coin cells were built using a lithium anode and 1M LiPF₆ in 1:1:1 EC (ethylene carbonate): EMC (ethyl methyl carbonate) : DMC (dimethyl carbonate) + 1 wt% VC (vinylene carbonate) electrolyte. Electrodes selected had a loading of 9.0 mg/cm² and a density of 3 g/cm³. Electrochemical measurements were taken from averages of three cells measured at 23 °C, and a voltage window of 3.0-4.3V.

Electrochemical characteristics evaluated include first cycle efficiency (FCE), 0.1 C specific capacity, 1.0 C specific capacity, capacity retention and DCIR growth using a 10s pulse.

Capacity retention and DCIR growth were determined based on performance after 50 cycles at 1C.

Table 3 below includes details of the materials tested.

**Table 3**

| **Material** | **Formula** | **Mg content (wt%)** | **Total Co content (wt%)** | **D₅₀ (µm)** | **Specific capacity at 1C (mAh/g)** | **Specific capacity at 0.1C (mAh/g)** | **CR (%)** | **FCE (%)** | **DCIR growth, 10 s (%)** | |
|---|---|---|---|---|---|---|---|---|---|---|
| Base 1 | Li_{1.030}Ni_{0.953}Co_{0.030}Mg_{0.010}O₂ | 0.2 | 1.8 | 9.5 | 194.6 | 213.9 | 80.9 | 87.3 | 29 | |
| Base 2 | Li_{1.019}Ni_{0.949}Co_{0.031}M_{90.020}O₂ | 0.5 | 1.8 | 10.2 | 190.2 | 208.1 | 85.8 | 85.8 | 34 | |
| Base 3 | Li_{1.027}Ni_{0.923}Co_{0.049}Mg_{0.029}O₂ | 0.7 | 2.9 | 9.65 | 185.0 | 203.1 | 93.5 | 87.2 | 34 | |
| Base 4 | Li_{1.007}Ni_{0.923}Co_{0.049}Mg_{0.038}O₂ | 0.9 | 2.9 | 12.2 | nm | nm | nm | nm | nm | |
| Base 5 | Li_{0.998}Ni_{0.917}Co_{0.049}Mg_{0.052}O₂ | 1.3 | 2.9 | 12.1 | nm | nm | nm | nm | nm | |
| Base 6 | Li_{1.024}Ni_{0.926}Co_{0.045}Mg_{0.037}O₂ | 0.9 | 2.7 | 9.0 | 180.6 | 197.9 | 96.4 | 85.2 | 32 | |
| Base 7 | Li_{1.003}Ni_{0.956}Co_{0.030}Mg_{0.020}O₂ | 0.5 | 1.8 | 9.6 | 193.4 | 211.5 | 84.8 | 87.3 | 32 | |
| Base 8 | Li_{1.009}Ni_{0.957}Co_{0.030}Mg_{0.015}O₂ | 0.4 | 1.8 | 9.3 | 196.3 | 218.1 | 80.7 | 89.2 | 38 | |
| Base 9 | Li_{1.005}Ni_{0.944}Co_{0.029}Mg_{0.038}O₂ | 0.9 | 1.7 | 10.7 | 182.7 | 198.2 | 91.0 | 84.1 | 30 | |
| Base 10 | Li_{1.996}Ni_{0.914}Co_{0.053}Mg_{0.051}O₂ | 1.3 | 3.2 | 9.49 | nm | nm | nm | nm | nm | |
| Base 12 | Li_{1.026}Ni_{0.930}Co_{0.049}Mg_{0.019}O₂ | 0.5 | 2.9 | 8.4 | 192.5 | 212.4 | 92.3 | 88.5 | 40 | |
| Base 13 | Li_{1.018}Ni_{0.911}Co_{0.058}Mg_{0.038}O₂ | 0.9 | 3.5 | 9.4 | 176.7 | 194.1 | 95.6 | 85.4 | 34 | |
| Base 14 | Li_{1.021}Ni_{0.930}Co_{0.048}Mg_{0.028}O₂ | 0.7 | 2.9 | 9.8 | 180.6 | 195.81 | 92.0 | 84.9 | 43 | |
| Base 15 | Li_{1.035}Ni_{0.921}Co_{0.048}Mg_{0.029}O₂ | 0.7 | 2.9 | 9.8 | 183.4 | 201.68 | 91.2 | 86.4 | 39 | |
| Base 16 | Li_{1.013}Ni_{0.902}Co_{0.081}Mg_{0.020}O₂ | 0.5 | 4.8 | 8.9 | 182.69 | 204.63 | 91.8 | 89.1 | 45 | |
| Base 17 | Li_{1.003}Ni_{0.904}Co_{0.079}Mg_{0.009}O₂ | 0.2 | 4.7 | 10.2 | 190.0 | 212.9 | 91.4 | 89.4 | 40 | |
| Base 18 | Li_{1.013}Ni_{0.900}Co_{0.075}Mg_{0.038}O₂ | 0.9 | 4.5 | 12 | 174.96 | 193.09 | 96.6 | 84.8 | 31 | |
| Base 19 | Li_{1.041}Ni_{0.925}Co_{0.048}Mg_{0.019}O₂ | 0.5 | 2.9 | 9.8 | 189.9 | 209.2 | 88.8 | 88.1 | 34 | |
| Base 20 | Li_{1.017}Ni_{0.907}Co_{0.068}Mg_{0.029}O₂ | 0.7 | 4.0 | 9.4 | 181.9 | 211.5 | 94.5 | 87.3 | 36 | |

| **Material** | **Formula** | **Mg content (wt%)** | **Surface Co content (wt%)** | **Total Co content (wt%)** | **D₅₀ (µm)** | **Specific capacity at 1C (mAh/g)** | **Specific capacity at 0.1C (mAh/g)** | **CR (%)** | **FCE (%)** | **DCIR growth, 10 s (%)** |
|---|---|---|---|---|---|---|---|---|---|---|
| Compound 1 | Li_{1.018}Ni_{0.930}Co_{0.049}Mg_{0.010}Al_{0.006}O₂ | 0.2 | 1.1 | 2.9 | 8.5 | 198.5 | 216.5 | 87.4 | 88.3 | 38 |
| Compound 2 | Li_{1.002}Ni_{0.927}Co_{0.053}Mg_{0.020}Al_{0.0065}O₂ | 0.5 | 1.3 | 3.2 | 9.5 | 192.9 | 209.6 | 93.9 | 87.4 | 39 |
| Compound 3 | Li_{0.995}Ni_{0.909}Co_{0.068}Mg_{0.027}Al_{0.0065}O₂ | 0.7 | 1.2 | 4.1 | 7.61 | 185.2 | 203 | 95.4 | 95.4 | 37 |
| Compound 4 | Li_{0.985}Ni_{0.913}Co_{0.061}Mg_{0.037}Al_{0.0069}O₂ | 0.9 | 0.7 | 3.7 | 11.7 | 176.1 | 192.7 | 96.2 | 84.3 | 29 |
| Compound 5 | Li_{0.980}Ni_{0.905}Co_{0.061}Mg_{0.051}Al_{0.0065}O₂ | 1.3 | 0.7 | 3.7 | 10.7 | 166.7 | 184.1 | 97.4 | 82.3 | 27 |
| Compound 6 | Li_{1.003}Ni_{0.923}Co_{0.045}Mg_{0.038}Al_{0.0062}O₂ | 0.9 | 0 | 2.7 | 7.5 | 177.4 | 192.3 | 97.4 | 82.9 | 29 |
| Compound 7 | Li_{0.997}Ni_{0.952}Co_{0.029}Mg_{0.019}Al_{0.0065}O₂ | 0.5 | 0 | 1.8 | 7.9 | 190.4 | 206.5 | 87.1 | 86.1 | 24 |
| Compound 8 | Li_{1.002}Ni_{0.919}Co_{0.064}Mg_{0.014}Al_{0.0062}O₂ | 0.4 | 2.1 | 3.9 | 8.2 | 198.7 | 218.4 | 91.5 | 91.2 | 48 |
| Compound 9 | Li_{0.980}Ni_{0.909}Co_{0.066}Mg_{0.037}Al_{0.0066}O₂ | 0.9 | 2.2 | 3.9 | 10.0 | 177.6 | 192.1 | 94.2 | 84.5 | 36 |
| Compound 10 | Li_{0.987}Ni_{0.900}Co_{0.064}Mg_{0.051}Al_{0.0065}O₂ | 1.3 | 0.7 | 3.9 | 9.4 | 171.6 | 188.4 | 97.2 | 83.8 | 33 |
| Compound 11 | Li_{0.984}Ni_{0.877}Co_{0.115}Mg_{0.010}Al_{0.0066}O₂ | 0.2 | 2.2 | 6.9 | 8.8 | 191.2 | 210.2 | 94.3 | 90.8 | nm |
| Compound 12 | Li_{0.995}Ni_{0.893}Co_{0.091}Mg_{0.019}Al_{0.006}O₂ | 0.5 | 2.5 | 5.5 | 8.4 | 188.0 | 206.8 | 96.2 | 89.2 | 46 |
| Compound 13 | Li_{0.018}Ni_{0.904}Co_{0.058}Mg_{0.038}Al_{0.007}O₂ | 0.9 | 0 | 3.5 | 8.2 | 173.1 | 188.8 | 96.0 | 84.4 | 24 |
| Compound 14 | Li_{0.009}Ni_{0.906}Co_{0.067}Mg_{0.028}Al_{0.007}O₂ | 0.7 | 1.1 | 4.0 | 8.8 | 177.9 | 193.6 | 97.3 | 84.6 | 23 |
| Compound 15 | Li_{0.988}Ni_{0.896}Co_{0.083}Mg_{0.027}Al_{0.006}O₂ | 0.7 | 2.2 | 5.0 | 8.2 | 182.9 | 200.3 | 95.3 | 95.3 | 37 |
| Compound 16 | Li_{0.009}Ni_{0.880}Co_{0.097}Mg_{0.019}Al_{0.007}O₂ | 0.5 | 1.0 | 5.8 | 7.1 | 188.9 | 208.8 | 95.6 | 89.9 | 36 |
| Compound 17a | Li_{0.992}Ni_{0.874}Co_{0.116}Mg_{0.009}Al_{0.007}O₂ | 0.2 | 2.2 | 6.9 | 8.6 | 189.6 | 208.6 | 92.5 | 90.3 | 44 |
| Compound 17b | Li_{0.017}Ni_{0.901}Co_{0.080}Mg_{0.010}Al_{0.007}O₂ | 0.2 | 0 | 4.7 | 8.3 | 185.4 | 202.8 | 90.6 | 90.6 | 37 |
| Compound 18a | Li_{0.984}Ni_{0.862}Co_{0.113}Mg_{0.036}Al_{0.007}O₂ | 0.9 | 2.3 | 6.7 | 11.2 | 172.5 | 189.2 | 98.6 | 85.1 | 31 |
| Compound 18b | Li_{1.002}Ni_{0.892}Co_{0.076}Mg_{0.038}Al_{0.007}O₂ | 0.9 | 0 | 4.5 | 11.2 | 171.0 | 187.0 | 97.2 | 83.5 | 25 |
| Compound 19 | Li_{1.009}Ni_{0.896}Co_{0.083}Mg_{0.018}Al_{0.006}O₂ | 0.5 | 2.1 | 4.9 | 9.0 | 189.2 | 207.2 | 94.6 | 88.8 | 39 |
| Compound 20 | Li_{1.016}Ni_{0.901}Co_{0.068}Mg_{0.029}Al_{0.007}O₂ | 0.7 | 0 | 4.0 | 8.0 | 183.6 | 202.0 | 93.3 | 87.0 | 37 |

### Design of Experiments Approach

Traditionally experiments are planned varying one factor at a time whilst keeping the other factors constant. An alternative approach is "Design of Experiments", where multiple variables are changed at once, allowing a large experimental space to be covered using relatively few experimental points. A computer-based statistical analysis is then applied to ascertain the key interactions.

The compounds made in the Examples above were prepared and analysed according to a Design of Experiments approach. Statistical analysis determined that in materials with an Al-containing surface enriched layer, increasing capacity retention was most strongly related to increasing Mg content, and to a lesser extent with increasing Co content in the surface enriched layer and in the core. The correlations had the following p-values:
Mg content: <0.0001
Co in core: 0.0204
Co in surface layer: 0.0086

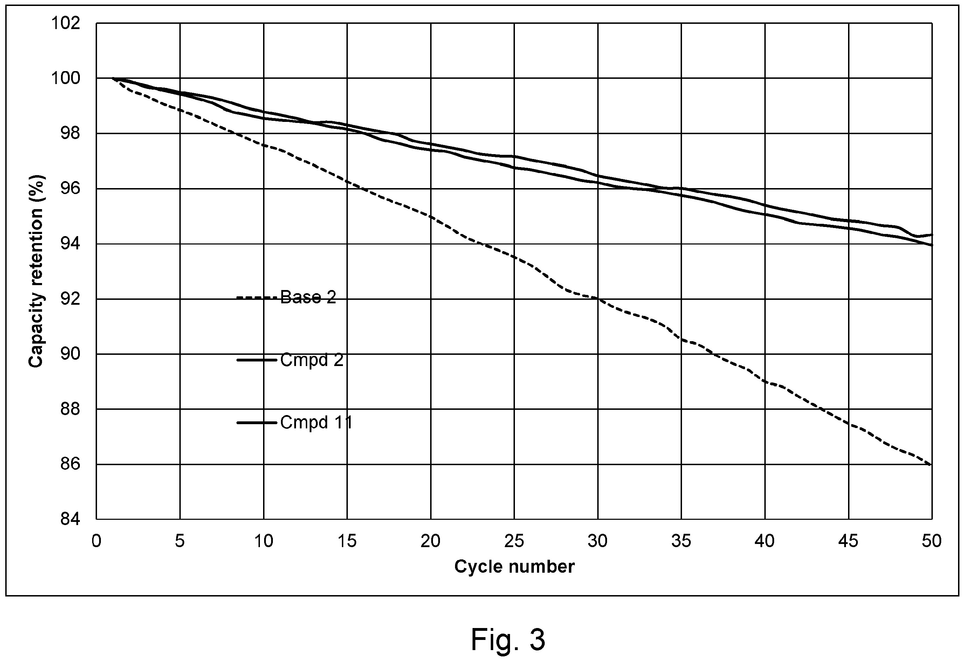

with the p-value indicating the statistical significance of the results and a p-value of <0.05 signifying a statistically significant result. The stronger dependence of capacity retention on Mg content than Co content indicates that excellent capacity retention may be achieved by increasing Mg while decreasing Co content. This is borne out by direct comparison of specific materials, see for example the discussion below relating to compounds 2 and 11 (Figure 3), compounds 1, 6 and 11, and compounds 6 and 9. As discussed herein, reduction in Co content in the materials is highly desirable.

### Further Observations

### The data permit the following further observations.

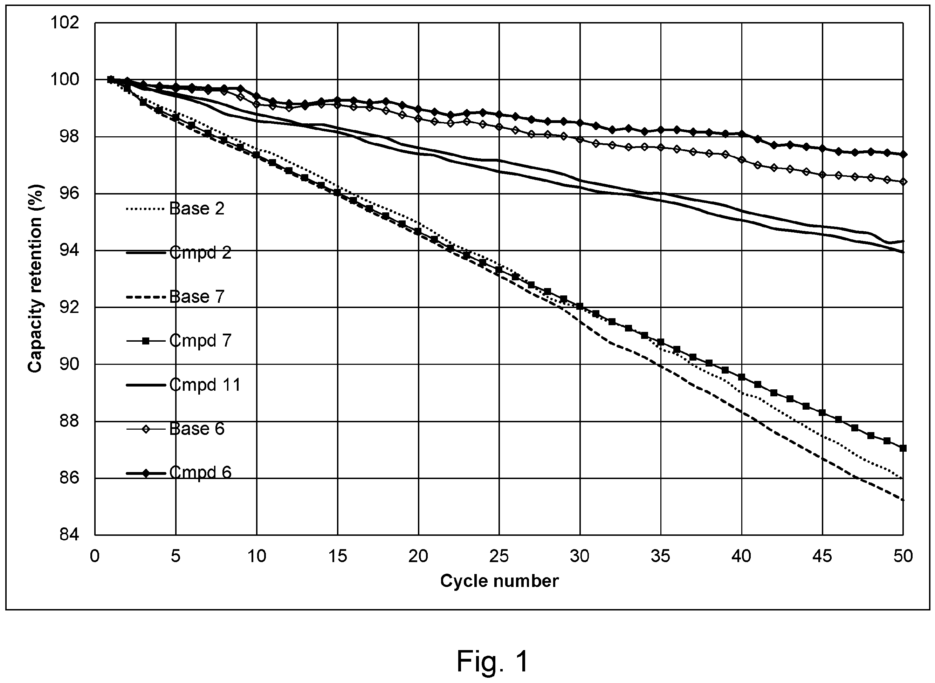

Figure 1 is a plot of capacity retention over 50 cycles for various materials of the invention and comparative materials. The plot reveals a clear improvement in capacity retention for materials including an aluminium enriched surface. For example, Compound 2 of formula Li_{0.99}Ni_{0.92}Co_{0.05}Mg_{0.02}Al_{0.006}O_{1.99}, having a surface enriched with aluminium, has significantly greater capacity retention than Base 2 of formula Li_{1.01}Ni_{0.95}Co_{0.03}Mg_{0.02}O_{1.99}, undoped. Similarly, Compound 7 has improved capacity retention over Base 7. Similarly, Compound 6 has improved capacity retention over Base 6.

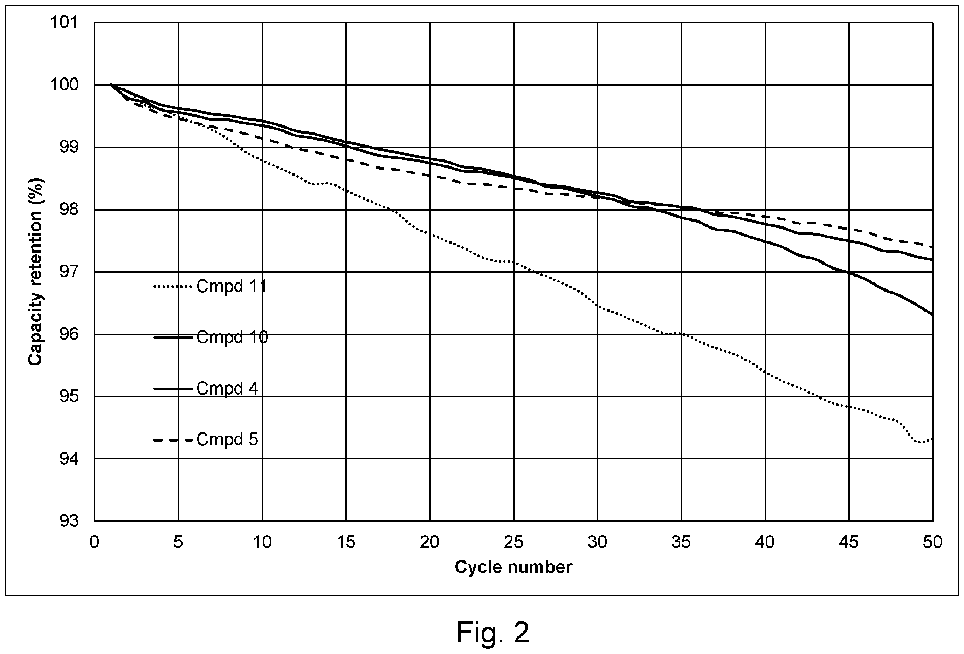

Figure 2 is a plot of capacity retention over 50 cycles for various materials of the invention. The plot reveals that the level of magnesium in the material has a clear effect on capacity retention. Compound 11, containing only 0.24 wt% Mg, has a lower capacity retention than each of Compounds 4, 5 and 10, which contain 0.92 wt%, 1.26 wt% and 1.26 wt% Mg respectively. Furthermore Compound 4, which contains a lower level of Mg than each of Compounds 5 and 10, exhibits a more noticeable drop in capacity retention after 30 cycles than either of the latter materials.

Figure 3 is a plot of capacity retention over 50 cycles for some materials of the invention and a comparative material. The plot shows a relatively low capacity retention for Base 2, which again shows the beneficial effect of including aluminium in the composition. Interestingly, the capacity retention for Compounds 2 and 11 are comparable at similar levels of Al. This reveals that, by increasing the level of magnesium in the composition and at the same time decreasing the overall amount of cobalt, it is possible to preserve capacity retention (Compound 2 contains around double the level of magnesium as Compound 11, and around half the level of cobalt).

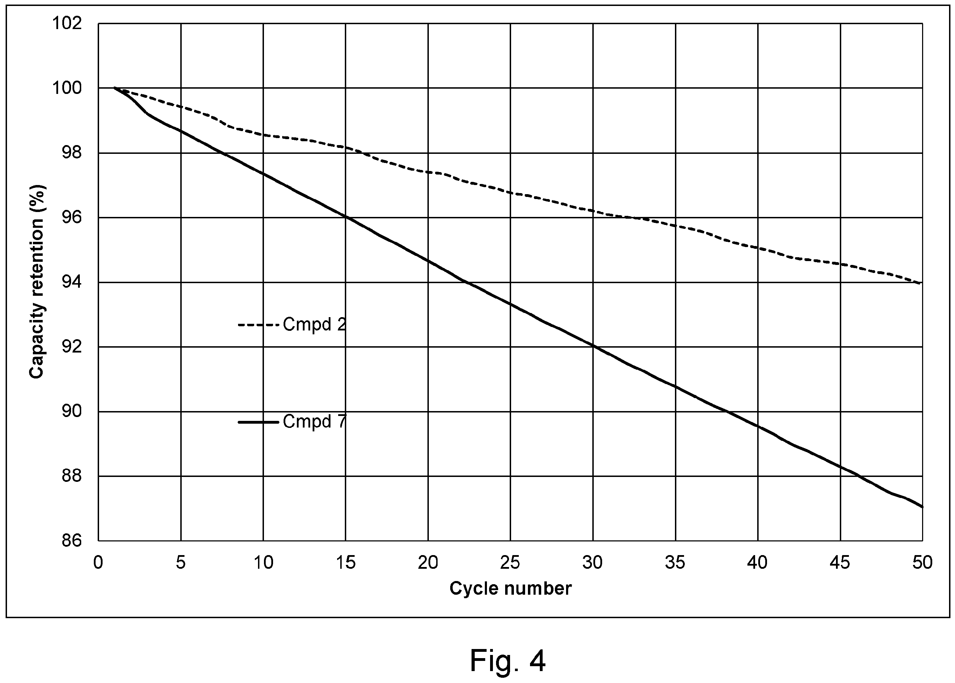

Figure 4 is a plot of the capacity retention for two materials of the invention (Compound 2 and Compound 7). The two materials contain the same level of magnesium and the same level of cobalt in the core. The difference is that Compound 2 contains some cobalt surface enrichment, whereas Compound 7 does not. This reveals that the presence of a small amount of cobalt in the enriched surface layer of the material may lead to improved capacity retention.

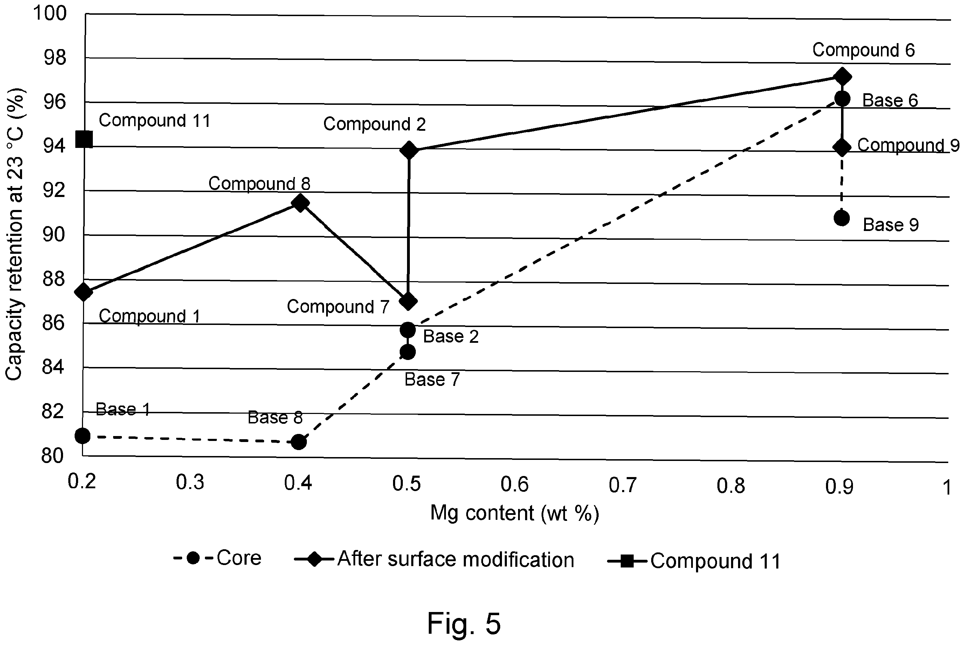

Figure 5 plots magnesium content of the materials against capacity retention for comparative (base) materials (dotted line) and inventive materials (solid line). Compound 11 is shown separately on the plot. The general trend is increasing capacity retention with magnesium content for both comparative and inventive materials. Inventive materials (which include aluminium) have higher capacity retention than their corresponding comparative materials with comparable magnesium content - Compound 1 has higher capacity retention than Base 1, Compound 8 has higher capacity retention than Base 8, etc.

At low levels of magnesium in the base of the material, exemplified by Compound 1 and Compound 11, an increase in the overall amount of cobalt in the material leads to an increase in capacity retention. Thus Compound 1, which contains a small overall amount of cobalt (1.8 wt%) has a lower capacity retention than Compound 11, which contains a similar magnesium level but a greater overall amount of cobalt (4.66 wt%). This shows that the stabilizing effect of cobalt can be provided instead by higher levels of magnesium (as represented by Compound 6, which has no cobalt at the surface and only 2.7 wt% in base).

Base 2 and Base 7, representing intermediate levels of magnesium in the base of the material, have similar compositions (similar Mg and Co levels) and as expected have similar capacity retentions. However the capacity retention for the corresponding surface-modified material for Base 7 (Compound 7) has a noticeably lower capacity retention than the material which results from surface modification of Base 2 (Compound 2). The enriched surface layer of Compound 7 contains no cobalt, whereas the enriched surface layer of Compound 2 does contain cobalt. This shows that, at intermediate magnesium levels, although removing cobalt from the enriched surface layer entirely does provide a material with acceptable capacity retention, the presence of a small amount of cobalt in the enriched surface layer can offer improved capacity retention.

A comparison of Base 6 and Compound 6 with Base 9 and Compound 9 shows that, at high levels of magnesium, the addition of cobalt to the enriched surface layer does not necessarily improve capacity retention. Compounds 6 and 9 contain similarly high levels of magnesium (0.92-0.93 wt%). Compound 9, which includes cobalt surface enrichment, has a lower capacity retention than Compound 6, which includes an enriched surface layer containing only aluminium. Therefore, it may be possible that the presence of high levels of magnesium in the core of a surface-modified material offers a way to stabilize materials which contain little or no cobalt in the enriched surface layer. Thus increasing the level of magnesium in the core may provide a way to reduce the level of cobalt required in the enriched surface layer.

### Analysis of c-axis contraction

The particulate lithium nickel oxide of the invention is characterised by a measurably reduced contraction of the c-axis during the H2→H3 phase transition which occurs at around 4.2 V vs Li⁺/Li. The length of the c-axis can be measured by *ex-situ* X-ray powder diffraction (XRPD) on cycled electrodes. This can be measured for the material in the H2 phase and the H3 phase, and a comparison of these can be used to determine the c-axis contraction. In order to understand the effect of the Mg dopant on the LiNi_{(1-x-y)}CoₓMg_{y}O₂ structure, site disorder defect structures were computed at several low lithiation states. Site exchange defects were built by swapping the position of two cations (or a cation and a site vacancy). The defect energies show that at low lithium loading, a site disordered structure is preferred where the Mg cation moves from its normal octahedral site (transition metal site) to a tetrahedral site midway between the transition metal oxide layer and the Li layer.

Calculations also show that Li may have a tendency to move to an equivalent tetrahedral site on the other side of the transition metal oxide layer. This disordered structure is significantly more stable than the undefective structure and reduces the lattice contraction observed at low Li loadings by a pillaring effect.

Table 4 below shows the c-axis changes for some materials of the invention based on ex *situ* XRPD measurements of electrodes cycled to 4 V and 4.3 V, respectively.

**Table 4**

| **Compound** | **Mg, mol%** | **Mg, wt%** | **c-axis / 4 V, Å** | **c-axis / 4.3 V, Å** | **Collapse, %** |
|---|---|---|---|---|---|
| 4 | 3.55 | 0.98 | 14.49 | 13.99 | 3.45 |
| 5 | 4.74 | 1.35 | 14.50 | 14.11 | 2.69 |

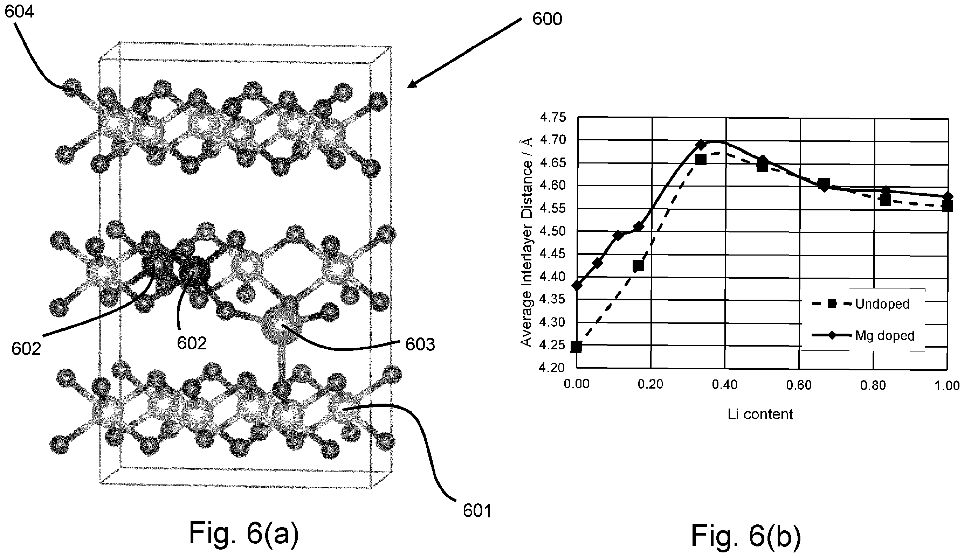

Figure 6(a) shows a DFT calculated structure 600 for site-disordered Li_{0.00}Ni_{(1-x-y)}CoₓMg_{y}O₂. The structure includes nickel atoms 601, cobalt atoms 602, magnesium atom 603 and oxygen atoms 604.

Figure 6(b) shows the lattice evolution of the Li-Ni-Co-Mg-O system with respect of the Li loading considering the most stable structure derived from DFT calculations.

## Claims

1. A surface-modified particulate lithium nickel oxide material comprising particles having Formula I
LiₐNiₓCo_{y}Mg_{z}AlₚM_{q}O_{2+b} Formula I
in which:
0.8 ≤ a ≤ 1.2
0.8 ≤ x < 1
0.03 ≤ y ≤ 0.078
0.017 ≤ z ≤ 0.1
0.004 ≤ p ≤0.01
0 ≤ q ≤ 0.2; and
-0.2 ≤ b ≤ 0.2;
wherein M is selected from Mn, V, Ti, B, Zr, Sr, Ca, Cu , Sn, Cr, Fe, Ga, Si, W, Mo, Ta, Y, Sc, Nb, Pb, Ru, Rh and Zn and combinations thereof; and
wherein the particles comprise a core and an enriched surface layer at the surface of the core, wherein the enriched surface layer comprises aluminium.

2. A particulate lithium nickel oxide material according to claim 1, wherein
0.025 ≤ z ≤ 0.06, preferably 0.03 ≤ z ≤ 0.05.

3. A particulate lithium nickel oxide material according to claim 2, wherein
0.04 ≤ y ≤ 0.060.

4. A particulate lithium nickel oxide material according to any one of claims 1 to 3, wherein 0.85 ≤ x < 1.

5. A particulate lithium nickel oxide material according to any one of claims 1 to 4, wherein 0.95 ≤ a ≤ 1.05, preferably 0.98 ≤ a ≤ 1.02.

6. A particulate lithium nickel oxide material according to any one of claims 1 to 5, wherein 0.03 ≤ z ≤ 0.06 and the amount of cobalt in the enriched surface layer is less than 1.0 wt% based on the total particle weight.

7. A particulate lithium nickel oxide material according to any one of claims 1 to 6, with the proviso that if y is less than or equal to 0.060, then z is greater than or equal to 0.03.

8. A particulate lithium nickel oxide material according to any one of claims 1 to 7 wherein the enriched surface layer contains substantially no cobalt.

9. A particulate lithium nickel oxide material according to any one of claims 1 to 8, wherein the c-axis contraction during the H2→H3 phase transition within the material is less than 3.9%, as measured by *ex-situ* XRPD.

10. A particulate lithium nickel oxide material according to any one of claims 1 to 9, wherein the capacity retention of the particulate lithium nickel oxide material after 50 cycles, tested in a half cell coin cell vs Li cell at 23 °C with a 1C charge/discharge rate and voltage window of 3.0-4.3V, at an electrode loading of 9.0 mg/cm² and an electrode density of 3.0 g/cm³, is at least 93%, and/or
wherein the % increase in DCIR of the particulate lithium nickel oxide material after 50 cycles, tested in a half cell coin cell vs Li cell at 23 °C with a 1C charge/discharge rate and voltage window of 3.0-4.3V, at an electrode loading of 9.0 mg/cm² and an electrode density of 3.0 g/cm³, is less than 50%, and/or
wherein the specific capacity of the particulate lithium nickel oxide material, tested in a half cell coin cell vs Li at 23 °C with a 1C charge/discharge rate and voltage window of 3.0-4.3V, at an electrode loading of 9.0 mg/cm² and an electrode density of 3.0 g/cm³, is at least 190 mAh/g.

11. A process for preparing particulate lithium nickel oxide material having Formula I
LiₐNiₓCo_{y}Mg_{z}AlₚM_{q}O_{2+b} Formula I
in which:
0.8 ≤ a ≤ 1.2
0.8 ≤ x < 1
0.03 ≤ y ≤ 0.078
0.017 ≤ z ≤ 0.1
0.004 ≤ p ≤0.01
-0.2 ≤ b ≤ 0.2, and
0 ≤ q ≤ 0.2;
wherein M is selected from Mn, V, Ti, B, Zr, Sr, Ca, Cu , Sn, Cr, Fe, Ga, Si, W, Mo, Ta, Y, Sc, Nb, Pb, Ru, Rh and Zn and combinations thereof;
the process comprising the steps of:
mixing lithium-containing compound with a nickel-containing compound, a cobalt-containing compound, a magnesium-containing compound and optionally an M-containing compound, wherein a single compound may optionally contain two or more of Ni, Co, Mg and M, to obtain a mixture;
calcining the mixture to obtain a calcined material; and
contacting the first calcined material with an aluminium-containing compound and optionally one or more of a cobalt-containing compound, a lithium-containing compound and an M-containing compound in a surface-modification step to form an enriched surface layer on the first calcined material.

12. A cathode comprising the particulate lithium nickel oxide material according to any one of claims 1 to 10.

13. A lithium secondary cell or battery comprising the cathode according to claim 12.

14. Use of the particulate lithium nickel oxide according to any one of claims 1 to 10 to improve the capacity retention of a lithium secondary cell or battery.
